(19) Europäisches Patentamt
European Patent Office
Office européen des brevets

(11) **EP 4 390 780 A1**

(12) **EUROPEAN PATENT APPLICATION**

(43) Date of publication:
**26.06.2024 Bulletin 2024/26**

(21) Application number: **22307037.6**

(22) Date of filing: **23.12.2022**

(51) International Patent Classification (IPC):
***G06N 10/40*** *(2022.01)*

(52) Cooperative Patent Classification (CPC):
**G06N 10/40;** G06N 10/20; G06N 10/70

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(71) Applicants:
• **Centre national de la recherche scientifique 75016 Paris (FR)**
• **Université de Strasbourg 67000 Strasbourg (FR)**
• **MacQuarie University Sydney, New South Wales 2109 (AU)**

(72) Inventors:
• **PUPILLO, Guido 67100 STRASBOURG (FR)**
• **JANDURA, Sven 67000 STRASBOURG (FR)**
• **BRENNEN, Gavin GLEBE, 2037 (AU)**
• **Srivastava, Vineesha 67000 STRASBOURG (FR)**

(74) Representative: **Lavoix 2, place d'Estienne d'Orves 75441 Paris Cedex 09 (FR)**

(54) **NON-LOCAL MULTI-QUBIT QUANTUM GATE USING A DRIVEN CAVITY MODE AND ASSOCIATED METHOD**

(57) The present invention concerns a device (10) adapted to implement a deterministic quantum gate, the device (10) comprising :
- a trap (14) having an excitation mode, the trap (14) being adapted to trap a plurality of quantum objects (12) coupled with the excitation mode of the trap (14), each quantum object (12) comprising three eigenstates, respectively named a $|0\rangle$ state, a $|1\rangle$ state and a $|e\rangle$ state, and the quantum objects (12) being in all-to-all coupling configuration, and
- a trap driver (16), the trap driver (16) being a wave generator adapted to generate a driving wave driving the excitation mode to which the plurality of quantum objects (12) are coupled, said wave having a frequency and an amplitude shaped to apply a deterministic non-local quantum gate on said quantum objects (12).

FIG.1

EP 4 390 780 A1

**Description**

**TECHNICAL FIELD OF THE INVENTION**

The present invention concerns a device adapted to implement a deterministic quantum gate. The present invention also concerns a method for implementing a deterministic quantum gate.

**BACKGROUND OF THE INVENTION**

The potential to extract quantum advantage from current quantum computers is significantly hampered by low qubit connectivity. The transpilation of a quantum circuit with all-to-all connectivity to a device with finite connectivity can significantly increase the circuit depth. Furthermore, quantum Low Density Parity Check (LDPC) codes allow for fault tolerant quantum computing with constant overhead, a performance unmatched by the currently leading approach of surface codes.

However, the implementation of quantum LDPC codes requires non-local quantum gates, while surface codes can be implemented with nearest neighbour connectivity. To fully leverage the computational advantages of lower overhead codes it is thus desirable to develop implementations that allow a connectivity beyond neighboring qubits.

One way to realize non local gates is via qubit shuttling. This is known the context of neutral atom architectures. Evaluating the cost of non-local operations based on qubit shuttling is highly non-trivial, as the architecture can perform certain parallel moves simultaneously (ie, in a time independent of the number of qubits being moved), but unequal moves must be performed serially.

An alternative method is to use interactions mediated by a quantized bosonic mode with common coupling to distant qubits. This is adaptable to a variety of architectures including motional modes of trapped ions, optical cavity modes for atomic spin qubits, and microwave modes for superconducting qubits.

Several proposals have been made for realizing non local gates, or entangled states, which come with varying degrees of control requirements. For deterministic gates, prior art finds the fidelity error scales as $C^{-1/2}$ where C is the cooperativity of the cavity supporting the mode. In contrast, non-local entangled states can be prepared as fixed points of dissipative maps with a fidelity error that scales like $C^{-1}$, though a fixed phase relation must be maintained between the fields addressing the qubits. If one expends additional detector resources, then heralded non-local gates are achievable with error $C^{-1}$ but with a failure probability of $C^{-1/2}$.

**SUMMARY OF THE INVENTION**

There is therefore a need for a device adapted to implement a deterministic quantum gate alleviating the previous drawbacks.

To this end, the specification describes a device adapted to implement a deterministic quantum gate, the device comprising:

- a trap having an excitation mode, the trap being notably a cavity, the trap being adapted to trap a plurality of quantum objects coupled with the excitation mode of the trap, each quantum object comprising three eigenstates, respectively named a $|0\rangle$ state, a $|1\rangle$ state and a $|e\rangle$ state, and the quantum objects being in all-to-all coupling configuration, and
- a trap driver, the trap driver being a wave generator adapted to generate a driving wave adapted to drive the excitation mode to which the plurality of quantum objects are coupled, said driving wave having a frequency and an amplitude shaped to apply a deterministic non-local quantum gate on said quantum objects.

According to further aspects of the device, which are advantageous but not compulsory, the device might incorporate one or several of the following features, taken in any technically admissible combination:

- the device is deprived of classical-quantum-feedback unit.
- the amplitude of the driving wave is shaped to cause an adiabatic time-evolution of the excitation mode.
- a first ratio is defined for the driving wave as the ratio of a frequency difference and a coupling strength, the frequency difference being the difference between the frequency of the driving wave and the frequency of the transition between the $|1\rangle$ state and the $|e\rangle$ state, the coupling strength being the strength of the coupling between the $|1\rangle$ state and the $|e\rangle$ state,

  the first ratio being superior or equal to 1, preferably superior or equal to 10, more preferably superior or equal to 100.
- the temporal variation of the amplitude of the driving wave corresponds to a pulse amplitude with two phases: an increase phase from a first value to a second value and a decrease from the second value to the first value, the temporal variation of the amplitude of the pulse being preferably given by:

$$A * sin^2\left(\pi * \frac{t}{T}\right)$$

Wherein:

- A is a constant,
- t is the time, and
- T is the pulse duration.

    - the trap driver is adapted to drive the trap with a detuning between the frequency of the driving wave and the frequency of the excitation mode given by:

$$\delta = \sqrt{\frac{\kappa}{2\gamma}}\,g$$

Wherein:

- $\delta$ is the detuning between the frequency of the driving wave and the excitation mode,
- $\kappa$ is the inverse lifetime of the excitation mode, and
- $\gamma$ is the inverse lifetime of the $|e\rangle$ state.

    - the device further comprises a coupling wave generator adapted to couple the $|0\rangle$ state and the $|1\rangle$ state by generating a coupling wave, and
the amplitude and the frequency of the driving wave are shaped to forbid two quantum objects to be simultaneously in the $|1\rangle$ state.

    - a first set of parameters and a second set of parameters are defined,

        the first set of parameters consisting of the Rabi frequency of the coupling wave, the photon excitation rate of the trap driver, the lifetime of the $|e\rangle$ state and the lifetime of the excitation mode,
the second set of parameters consisting of the detuning between the frequency of the driving wave and the frequency of the transition between the $|1\rangle$ state and the $|e\rangle$ state, the detuning between the frequency of the driving wave and the frequency of the excitation mode, the strength of the coupling between the $|1\rangle$ state and the $|e\rangle$ state and the parameter $\frac{\eta^2}{\Omega}$,
the amplitude and the frequency of the driving wave being shaped so that each parameter of the second set is superior to 10 times each parameter of the first set.

    - the trap driver is adapted to drive the trap with a detuning between the frequency of the driving wave and the frequency of the excitation mode given by:

$$\delta = \frac{2g^2}{\Delta}$$

Wherein:

- $\delta$ is detuning between the frequency of the driving wave and the frequency of the excitation mode,
- $\Delta$ is the difference between the frequency of the driving wave and the frequency of the transition between the $|1\rangle$ state and the $|e\rangle$ state, and
- $g$ is the strength of the coupling between the $|1\rangle$ state and the $|e\rangle$ state;

- the amplitude of the driving wave is shaped to obtain a parameter $\dfrac{\eta^2}{\Omega}$ given by:

$$\frac{\eta^2}{\Omega} = \sqrt{\frac{(N-1)\kappa}{2\gamma}}\, g$$

Wherein:

- $\eta$ is the photon excitation rate of the driving wave,
- $\Omega$ is the Rabi frequency of the coupling wave,
- N is the number of quantum objects,
- $\kappa$ is the inverse lifetime of the excitation mode,
- $\gamma$ is the inverse lifetime of the $|e\rangle$ state, and
- $g$ is the strength of the coupling between the $|1\rangle$ state and the $|e\rangle$ state;

  - the trap driver is adapted to generate a driving wave with a detuning from the frequency of the transition between the $|1\rangle$ state and the $|e\rangle$ state given by:

$$\Delta = \left(\frac{8}{5}\right)^{1/4} \sqrt{\frac{\gamma}{2\kappa}}\, g$$

Wherein:

- $\Delta$ is the difference between the frequency of the driving wave and the frequency of the transition between the $|1\rangle$ state and the $|e\rangle$ state,
- $\kappa$ is the inverse lifetime of the excitation mode,
- $\gamma$ is the inverse lifetime of the $|e\rangle$ state, and
- $g$ is the strength of the coupling between the $|1\rangle$ state and the $|e\rangle$ state;

  - the wave generator is chosen in the list consisting of a laser, a radio frequency generator and a microwave generator;
  - the quantum gate that the device is adapted to apply is chosen among:

    - a CZ-gate,
    - a controlled-CZ gate,
    - a Mølmer-Sørensen gate,

    - a gate adapted to generate a GHZ gate when applied to as state $\left[\dfrac{|0\rangle+|1\rangle}{\sqrt{2}}\right]^{\otimes N}$ , and
    - a gate adapted to generate a W-state when applied to a state $|0\rangle^{\otimes N}$.

  - each quantum object is chosen in the list consisting of an atom, an ion, a superconducting qubit, a spin, a N-V center, a molecule and a quantum dot.

The present description also concerns a method for implementing a deterministic quantum gate, the method being implemented by a device adapted to implement a deterministic quantum gate, the method comprising:

- a step of trapping a plurality of quantum objects coupled with an excitation mode of a trap, the trap being notably a cavity, each quantum object comprising three eigenstates, respectively named a $|0\rangle$ state, a $|1\rangle$ state and a $|e\rangle$ state, and the quantum objects being in all-to-all coupling configuration, and
- a step of driving the trap with a driving wave adapted to drive the excitation mode to which the plurality of quantum objects are coupled, said driving wave having a frequency and an amplitude shaped to apply a deterministic non-local quantum gate on said quantum objects.

The term "adapted to" used here should be understood as meaning "able to" or "configured to".

## BRIEF DESCRIPTION OF THE DRAWINGS

The invention will be better understood on the basis of the following description which is given in correspondence with the annexed figures and as an illustrative example, without restricting the object of the invention. In the annexed figures:

- figure 1 is a schematic representation of an example of a device adapted to implement a deterministic quantum gate,
- figure 2 is a schematic representation of a state level scheme corresponding to the device of figure 1,
- figure 3 is a graph showing an example of amplitude variation,
- figure 4 is a schematic representation of another example of device adapted to implement a deterministic quantum gate, and
- figure 5 to 9 represents the results of simulations made by the Applicant.

## DETAILED DESCRIPTION OF THE PREFERRED EMBODIMENTS

### GENERAL DESCRIPTION OF THE SET-UP

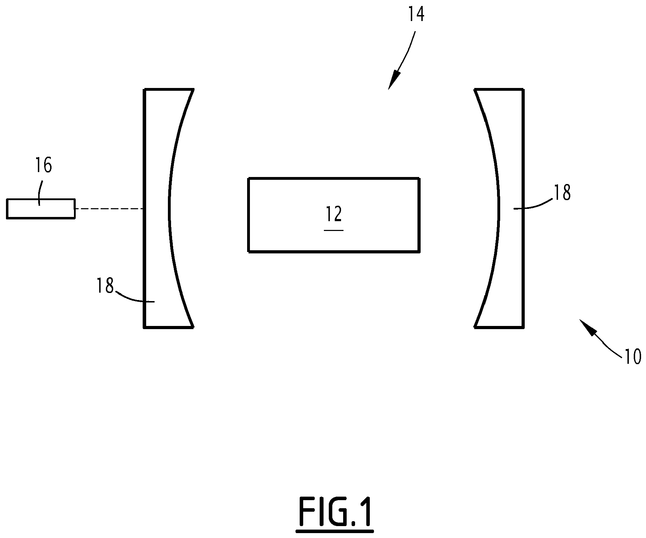

A device 10 adapted to implement a deterministic quantum gate is schematically illustrated on figure 1.

The device 10 is thus able to obtain the result of a deterministic quantum gate by manipulating quantum objects 12.

A quantum object is an object whose dynamics cannot be described using classical physics, but instead can only accurately be described using the principles of quantum mechanics.

The quantum objects 12 are, for example chosen among the following elements: an atom, an ion, a superconducting qubit, a spin, a N-V center, a molecule and a quantum dot.

Hereinafter, the quantum objects 12 are atoms, so that they are simply named atoms 12.

However, the device 10 may be implemented with all the types of quantum objects previously described.

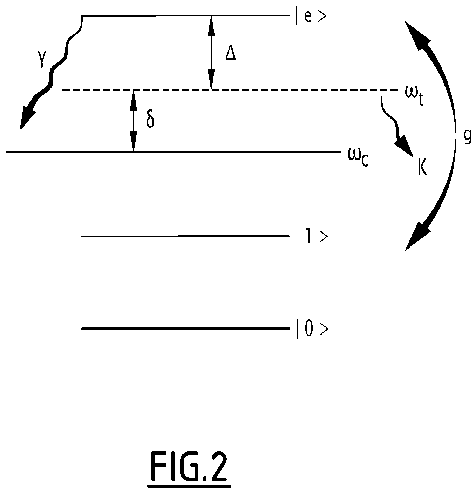

As schematically represented on figure 2, each atom 12 comprises a three eigenstates, respectively named state $|0\rangle$, state $|1\rangle$ and state $|e\rangle$ hereinafter.

It should therefore be understood that the atom 12 are here any element having at least three discrete energy levels that can be coupled with electromagnetic fields.

Hereinafter, each atom 12 is modelled as a three level system with computational basis states $|0\rangle$ and $|1\rangle$ with energies (henceforth setting $\hbar = 1$) $\omega_0$, $\omega_1$ and a third, excited state $|e\rangle$ at energy $\omega_e$.

State $|e\rangle$ has a finite lifetime, which is named $\dfrac{1}{\gamma}$ hereinafter.

$g$ is the strength of the coupling between the state $|1\rangle$ and the state $|e\rangle$.

Such device 10 enables to achieve a gate, that is achieving a calculation on the atoms 12 and providing with the result of this calculation.

As an example, the gate is a controlled-Z (CZ) gate.

Alternatively, the gate is one of the following gate:

- a $C_2Z$-gate,
- a Mølmer-Sørensen gate,
- a gate adapted to generate a GHZ gate when applied to a product state $\left[\dfrac{|0\rangle + |1\rangle}{\sqrt{2}}\right]^{\otimes N}$, and
- a gate adapted to generate a W-state when applied to a state $|0\rangle^{\otimes N}$.

According to the example of figure 1, the device 10 comprises a trap 14 and a trap driver 16.

In the present example, the trap 14 is a cavity 18, so that hereinafter the trap 14 is simply named cavity 18.

As other examples, the trap 14 enables to obtain trapped ions with a center of mass mode or NV centers coupled to a mechanical resonator or an optical cavity.

The cavity 18 supports a harmonic excitation mode.

The frequency of the excitation mode is named $\omega_c$.

The linewidth (inverse of the lifetime) of the excitation mode is named $\kappa$ in the remainder of the specification.

The cavity 18 is adapted to trap a plurality of atoms 12 coupled with the excitation mode of the cavity 18.

The atoms 12 are thus in all-to-all coupling configuration.

The number of atoms 12 in the cavity 18 is N, N being an integer equal or superior to 2.

The trap driver 16 is a wave generator adapted to generate a driving wave adapted to drive the excitation mode to which the plurality of atoms 12 are coupled.

In the present example, the trap driver 16 is a laser, so that this element is named laser 16 hereinafter.

In variant, the trap driver 16 is a radio frequency generator or a microwave generator.

The frequency of the laser 16 is named $\omega_L$.

The amplitude of the laser 16 is quantified by $\eta$, which designates the photon excitation rate of the driving wave.

The frequency of the driving wave is detuned from the frequency of the excitation mode by a detuning named $\delta$.

In other words, the detuning between the cavity 18 and the laser 16 is $\delta = \omega_c - \omega_L$, The difference between the frequency of the driving wave and the frequency of the transition between the state $|1\rangle$ and the state $|e\rangle$ is named frequency difference $\Delta$.

In other words, the detuning between the $|1\rangle \leftrightarrow |e\rangle$ transition and the field is $\Delta = \omega_e - \omega_L$, where $\omega_1 \equiv 0$.

The frequency and the amplitude of the driving wave are shaped to apply a deterministic non-local quantum gate on said quantum objects.

It should there be understood what a deterministic quantum gate is, and notably that it implies that the device 10 is deprived of classical-quantum-feedback unit.

Even if all gates are implemented deterministically, a quantum computation typically ends with a measurement of the final state, and in general the outcome of this measurement is probabilistic.

Typically one is therefore not interested in the outcome of a single final measurement, but instead executes the quantum circuit several times and is interested in the probability distribution of the final measurement.

To ensure that the measurement results follow the probability distribution intended by the experimentalist it is necessary that all operations in the circuit output the correct state or implement the correct gate.

In a deterministic approach a given quantum operations simply always works as desired.

In a probabilistic approach instead there is some probability of failure, which is however heralded.

A heralded failure means that an additional measurement, not on the qubits used for the computation but on some other degree of freedom, tells the experimentalist that the gate has failed.

This additional degree of freedom may be the amplitude of a light field or the state of an atom. To sample from the desired probability distribution of the final measurement results it is necessary to first post-select all runs in which all probabilistic operations in the computation have succeeded. The number of runs in which this is the case in general decreases exponentially with the number of probabilistic operations, rendering this scheme soon unsuitable for large computations.

In practice, this means that a quantum computation is carried out by the device 10 with the following steps:

i) All atoms are initialised (e.g. through optical pumping) to some given, initial state (typically either $|0\rangle$ or $|1\rangle$).

ii) The set of single-qubit gates and two-or-many-qubit gates making up the desired quantum circuit is applied. Whenever a two qubit gate or a many qubit gate is applied, the device 10 should be used. First, the set of qubit on which the gate is to be applied is coupled to the cavity, e.g. by tuning them close to resonance with the cavity mode using an AC-Stark shift or by physically moving them into the cavity. There are many ways to do this, and this is not the crucial part of our scheme. Then, either the laser 16 is driven in an adiabatic fashion (see first embodiment) or the laser is turned on with a constant amplitude, and a specific pulse Omega(t) is applied on the microwave coupling |0> and |1> (see second embodiment). Some of the single qubit gates will include either measurement or reset operations performed in the course of quantum error correction.

iii) After all quantum gates have been applied, the state of the atoms is read out.

This enables to obtain a device 10 which is drastically simplified. It also avoids disruption of dynamical decoupling sequences and limits crosstalk.

*SPECIFIC DESCRIPTION OF A FIRST EMBODIMENT*

According to a first embodiment, the amplitude of the driving wave is shaped to cause an adiabatic time-evolution of the excitation mode of the cavity 18.

Such adiabatic approach uses the set-up described in figure 1.

The amplitude of the driving wave may have any shape fulfilling the adiabatic time-evolution condition.

As a specific example, the temporal variation of the amplitude of the driving wave corresponds to a pulse

amplitude $\eta(t)$ with two phases: an increase phase from a first value to a second value and a decrease from the second value to the first value.

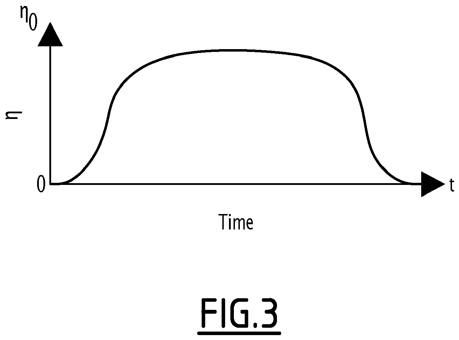

Figure 3 corresponds to an example of pulse amplitude $\eta(t)$ adapted to create such an adiabatic behaviour of the system. The temporal variation of the amplitude of this pulse is given by:

$$A * sin^2\left(\pi * \frac{t}{T}\right)$$

Wherein:

- A is a constant,
- t is the time, and
- T is the pulse duration.

More specifically, in this case of figure 3, the pulse amplitude $\eta(t)$ is given by:

$$\eta(t) = \begin{cases} \eta_0 sin^2(\varepsilon t) & if\ t < \frac{\pi}{2\varepsilon} \\ \eta_0 & if\ t \in \left[\frac{\pi}{2\varepsilon}, T - \frac{\pi}{2\varepsilon}\right] \\ \eta_0 sin^2\big(\varepsilon(T-t)\big) & if\ t > T - \frac{\pi}{2\varepsilon} \end{cases}$$

The bosonic mode at frequency $\omega_c$ and with annihilation (creation) operators $a$ ($a^\dagger$) couples the states $|1\rangle$ and $|e\rangle$ with coupling strength g and is driven by a classical field with strength $\eta(t)$ according to:

$$H_{drive} = \eta(t)sin(\omega_L t)\big(a + a^\dagger\big)$$

The Hamiltonian of the qubit-mode system after invoking the rotating wave approximation and in the rotating frame defined by $U(t) = e^{it\omega_L(a^\dagger a + \Sigma_j|e_j\rangle\langle e_j|)}$ is:

$$H = H_{atoms} + H_{cav} + H_{coupl} \quad (1)$$

With:

- $$H_{atoms} = \sum_{j=1}^{N} \Delta|e_j\rangle\langle e_j| \quad (2)$$
- $H_{cav} = \delta a^\dagger a + i\eta(a^\dagger - a)$ (3)
- $$H_{coupl} = g\sum_{j=1}^{N}|e_j\rangle\langle 1_j|\,a + |1_j\rangle\langle e_j|a^\dagger \quad (4)$$

To implement a quantum gate, a pulse $\eta(t)$ of duration $T$ with $\eta(0) = \eta(T) = 0$ is applied, while the remaining parameters $\Delta$, $\delta$ and $g$ are kept fixed.

The evolution of a computational basis state $|q\rangle$ (for q $\in \{0,1\}^N$) under this pulse can be considered: Since $|q\rangle$ is an eigenstate of $H$ at time $t = 0$ it will, by the adiabatic theorem and as long as $\eta$ changes slowly enough, stay an eigenstate of $H$ throughout the evolution. Hence the final state will be of the form

$$e^{i\phi_q}|q\rangle.$$

By symmetry under permutation of the atoms 12, the phase

$$-\bar{\phi}_q$$

can only depend on the number of ones in q, given by $n_q = \Sigma_j q_j$. The unitary implemented by the pulse is thus of the form

$$U = \Sigma_q e^{i\phi_{n_q}}|q\rangle\langle q|$$ and completely described by the phases $\phi_0, ..., \phi_N$.

The Applicant has thus studied three relevant error sources: the diabatic error which arises because $\eta$ does not change infinitely slowly and the errors induced by a finite lifetime $\dfrac{1}{\kappa}$ of photons in the cavity 18 and a finite lifetime $\dfrac{1}{\gamma}$ of excitations in the $|e\rangle$ state.

Both the phases $\phi_0, ..., \phi_N$ and the size of the three errors can be found numerically for a given pulse $\eta(t)$ and given parameters $\Delta, \delta, g, \kappa$ and $\gamma$.

By way of example, consider two atoms and set the goal of implementing a CZ gate up to single qubit gates, i.e. achieving

$$\phi_2 - 2\phi_1 + \phi_0 = \pi$$

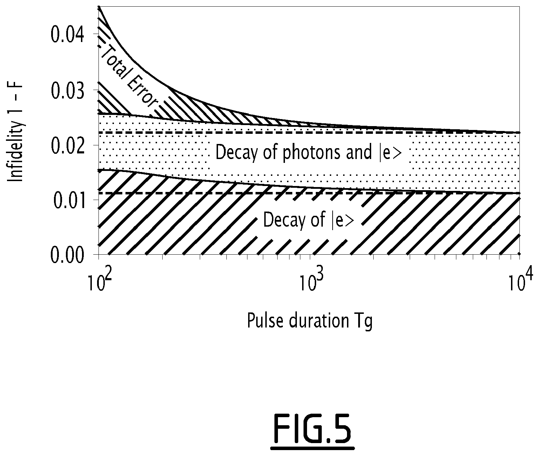

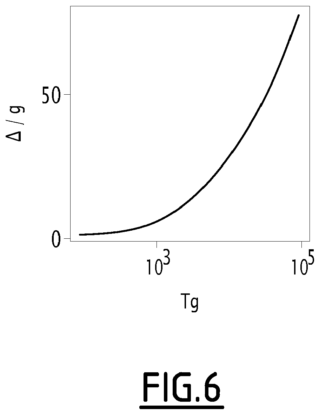

For different pulse durations $T$, $\eta(t) = \eta_0 sin^2\left(\dfrac{\pi t}{T}\right)$ is taken and optimized over $\Delta, \delta$ and $\eta_0$ to minimize the total gate error. The results for the case $\gamma = \kappa = 10^{-2}g$ are shown in figure 5. As can be seen from figure 6 the minimal error is achieved in the limit $\Delta \to \infty$. This limit allows an analytic treatment of the problem, because the $|e\rangle$ state can be adiabatically eliminated. In the following, closed formulas are given for the optimal gate parameters and the resulting errors in this limit.

To adiabatically eliminate the $|e\rangle$ states, a second order Schrieffer-Wolff transformation (see section "simulations and calculation") is performed and enables to obtain:

$$H_{eff} = \sum_q |q\rangle\langle q| \otimes H_{n_q}$$

where the $H_0, ..., H_N$ acts on the cavity 18 only and are given by:

$$H_n = \delta_n a^\dagger a + i\eta_n\left(a^\dagger - a\right) + \mathcal{O}\left(\Delta^{-3}\right) \quad (5)$$

Where:

- $\delta_n = \delta - \left(\dfrac{g^2}{\Delta} + \dfrac{g^2\delta}{\Delta^2}\right)n$, and

- $\eta_n = \eta\left(1 - \left(\dfrac{g^2}{2\Delta^2}\right)n\right)$.

The $H_n$ can be diagonalized using the displacement operator $D(\alpha) = exp(\alpha a^\dagger - \alpha^* a)$ with $\alpha = -i\dfrac{\eta_n}{\delta_n}$ to obtain:

$$D(\alpha)^\dagger H_n D(\alpha) = \delta_n a^\dagger a - \dfrac{\eta_n^2}{\delta_n} \quad (6)$$

The phase $\phi_n$ is thus given by $\phi_n = \int_0^T \frac{\eta_n(t)^2}{\delta_n} dt$ , which can be evaluated to

$$\phi_n(t) = \frac{I}{\delta}\left(1 + \frac{g^2}{\Delta\delta}n + \frac{g^4}{\Delta^2\delta^2}n^2\right) + \mathcal{O}(I\Delta^{-3}) \text{ (7)}$$

where $I = \int_0^T \eta(t)^2 \, dt$ .

Up to a global phase and single qubit gates the implemented unitary $U$ is thus equivalent to:

$$U' = exp\left(-i\theta\hat{n}^2 + \mathcal{O}(\Delta^{-3})\right)$$

where:

- $n = \Sigma_{\alpha}|1_i\rangle\langle 1_i|$, and
- $\theta = I\frac{g^4}{\Delta^2\delta^3}$ .

This is because the part of $\phi_n$ which is linear in n can be removed by the appropriate single qubit rotations around the z axis. Note that for a fixed $\theta$ the error $I\Delta^{-3}$ vanishes as $\Delta \to \infty$. For N = 2 the gate $U'$ is, up to single qubit gates, equivalent to a CZ gate for $\theta = \frac{\pi}{2}$ . In the $N = 2$ case the CZ gate can be implemented exactly even for finite $\Delta$ by choosing $I$ appropriately to cancel the terms in higher orders of $\Delta$.

In the case of arbitrary $N,$ applying $U$ with $\theta = \frac{\pi}{2}$ to the initial state $\left(\frac{|0\rangle+|1\rangle}{\sqrt{2}}\right)^{\otimes N}$ generates the graph state of the complete graph on N qubits, from which a GHZ state:

$$|GHZ\rangle = \frac{\left(|0\rangle^{\otimes N} + |1\rangle^{\otimes N}\right)}{\sqrt{2}}$$

by can be generated with single qubit gates only.

The two fundamental error sources affecting the fidelity of the implementation of $U$ are now studied : the finite linewidth $\kappa$ of the cavity 18 and the finite lifetime $\frac{1}{\gamma}$ of the excited state $|e\rangle$.

As a measure of fidelity, the Bell-state-fidelity is chosen, which is obtained by applying the gate to the initial state $|+\rangle^{\otimes N}$ . From the density matrix $\rho$ of the final state of the atoms the fidelity is calculated as:

In the section "simulations and calculations", an analytic formula for 1 - F is derived to first order of $\gamma$ and $\kappa$:

$$1 - F = \frac{\theta}{4}N\left(\frac{\kappa}{\gamma} + \frac{2\delta\gamma}{g^2}\right) \text{ (8)}$$

Remarkably, the error $\frac{\theta N \kappa}{4\delta}$ due to the finite linewidth of the cavity 18 can be significantly smaller than the expected number of photons leaked from the cavity 18, given $IK$ by $\dfrac{I\kappa}{(\delta_n)^2}$.

Intuitively, this arises because the expected number of leaked photons does not strongly depend on n, so counting the number of leaked photons reveals only a small amount of information on the state of the atoms 12. From equation (8), the optimal choice of $\delta$ can be determined as:

$$\delta = \sqrt{\frac{\kappa}{2\gamma}}\, g$$

leading to $1 - F = \dfrac{N\theta}{\sqrt{2C}}$ where $C = \dfrac{g^2}{\kappa\gamma}$ denotes the cooperativity of the cavity 18.

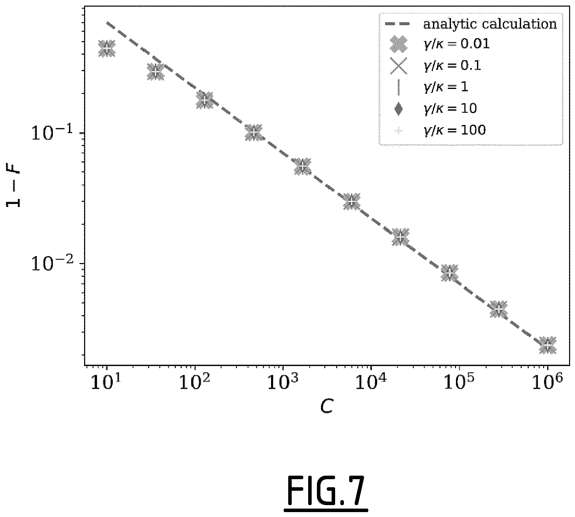

The analytic formula is confirmed for the fidelity for the case of two atoms 12 through a numerical simulation. The pulse shape $\eta(t) = \eta_0 \sin^2\left(\dfrac{\pi t}{T}\right)$ was considered, $\varDelta = 100g$ was taken, $\eta_0$ was chosen so that $I = \dfrac{\pi\varDelta^2\delta^3}{2g^4}$ and Twas taken large enough so that the error due to nonadiabadicity is negligible compared to the error due to photon losses through the cavity 18 and decay of $|e\rangle$. It is shown that the gate error 1 - F as a function of the cooperativity for different ratios $\dfrac{\gamma}{\kappa}$ in figure 7 and an excellent agreement is observed between the analytical formula and the numerical results.

These results show that it is advantageous that the ratio $\dfrac{\varDelta}{g}$ is preferably superior or equal to 1, preferably superior or equal to 10, more preferably superior or equal to 100.

Furthermore, it is preferable that the laser 16 be adapted to drive the cavity 18 with a detuning between the frequency of the driving wave and the frequency of the excitation mode given by:

$$\delta = \sqrt{\frac{\kappa}{2\gamma}}\, g$$

This enables to obtain an adiabatic behaviour of the system enabling to achieve a deterministic non-local quantum gate.

*SPECIFIC DESCRIPTION OF A SECOND EMBODIMENT*

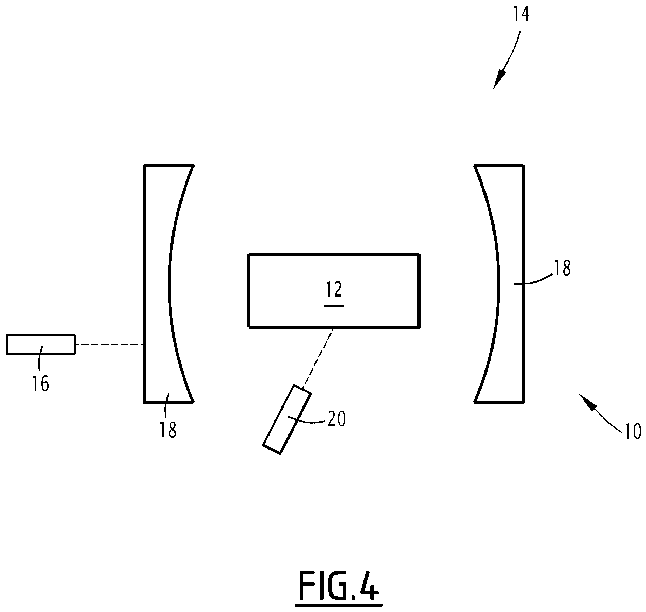

In the case of the second embodiment, as illustrated on figure 4, the device 12 further comprises a coupling wave generator 20.

The coupling wave generator 20 is adapted to couple the $|0\rangle$ state and the $|1\rangle$ state by generating a coupling wave $\Omega(t)$.

For instance, the coupling is a laser, a radio frequency generator or a microwave generator.

The amplitude and the frequency of the driving wave are shaped to forbid two quantum objects to be simultaneously in the $|1\rangle$ state. This corresponds to a blockade effect.

Different kinds of driving waves enable to obtain such a blockade effect.

So as to explicit several driving waves causing a blockade effect, it is interesting to expose the physics underlying such phenomenon.

For this analysis, the cavity losses are modelled through nonhermitian terms $i\dfrac{\gamma}{2}|e\rangle\langle e|$ and $i\dfrac{\kappa}{2}a^\dagger a$ in the Hamiltonian, which gives a lower bound on the fidelity of the gate. The Hamiltonian is thus given by:

$$H = H_{atoms} + H_{cav} + H_{coupl} \ (1)$$

With:

- 
$$H_{atoms} = \sum_{j=1}^{N} \left[ \left( \Delta - i\frac{\gamma}{2} \right) |e_j\rangle\langle e_j| + \frac{\Omega(t)}{2} |0_j\rangle\langle 1_j| + h.c \right] \ (9)$$

- 
$$H_{cav} = \left( \delta - i\frac{\kappa}{2} \right) a^\dagger a + i\eta(a^\dagger - a) \ (10)$$

- 
$$H_{coupl} = g \sum_{j=1}^{N} |e_j\rangle\langle 1_j| a + |1_j\rangle\langle e_j| a^\dagger \ (4)$$

The blockade approach operates in the regime:

$$\Omega, \eta, \gamma, \kappa \ll \Delta, \delta, g, \frac{\eta^2}{\Omega}$$

First, the eigenstates of $H$ are discussed in the $\Omega = \eta = \gamma = \kappa = 0$ case.

The simplest eigenstates of $H$ are just states the Dicke state $|D_n\rangle$ with $n$ atoms in $|1\rangle$ and no atoms in $|e\rangle$ and no photons in the cavity 18. These eigenstate have energy 0 and are not effected by the decay of $|e\rangle$ or the photons.

The Dicke states $|D_n\rangle$ couple via the laser,16 to polaritons $|p_n^\pm\rangle$, which are eigenstates of $H$ with $n$ atoms in either $|1\rangle$ or $|e\rangle$ and one excitation either in $|e\rangle$ or in the cavity 18.

In the $\eta \to 0$ limit, the laser 16 can only excite these eigenstates $|D_n\rangle$ to one of the polariton excitations $|p_n^\pm\rangle$ if the energy of the polarition excitation is 0 as well, so that the laser 16 is resonant.

The goal is to choose $\Delta$, $\delta$ and g such that this resonance condition is fulfilled if and only if n = 2, so that polaritons can only get excited from the $|D_2\rangle$ state. As shown in the section 'simulations and calculations" this is achieved by taking:

$$\delta = \frac{2g^2}{\Delta}$$

Due to this coupling of the $|D_2\rangle$ state to the polaritons, the energy of $|D_2\rangle$ gets shifted to $E_{D_2}$. If $\Omega \ll |E_{D_2}|$ the dynamics of the system is thus constrained to $|D_0\rangle = |0,..,0\rangle$ and $|D_1\rangle = |W\rangle = \frac{|10...0\rangle + \cdots + |0...01\rangle}{\sqrt{N}}$ and governed by the effective Hamiltonian (see In the section "simulations and calculations").

$$H_q = \frac{\sqrt{N}\Omega(t)}{2} |0\ldots0\rangle\langle W| + hc + \left( -\frac{\eta^2\Delta}{2g^2} - i\frac{\Gamma_0}{2} \right) |0\ldots0\rangle\langle 0\ldots0| + \left( -\frac{\eta^2\Delta}{g^2} - i\frac{\Gamma_w}{2} \right) |W\rangle\langle W|$$

Each term of the previous equation corresponds to equations 11 to 13.

The detunings $-\frac{\eta^2\Delta}{2g^2}$ and $-\frac{\eta^2\Delta}{g^2}$ of $|0\ldots0\rangle$ and $|W\rangle$, respectively, arise because the energy of the state with zero photons in the cavity 18 gets shifted through the off-resonant laser 16. The finite lifetimes $\frac{1}{\Gamma_0}$ and $\frac{1}{\Gamma_W}$ are given by:

$$\Gamma_0 = \frac{\eta^2 \Delta^2 \kappa}{4g^2} \quad (14),$$

and

$$\Gamma_W = \frac{\eta^2 \left(\kappa \Delta^2 + \gamma g^2\right)}{g^4} + \frac{(N-1)|\Omega|^2 \left(\kappa \Delta^2 + \gamma g^2\right)}{2\eta^2 \Delta^2} \quad (15)$$

$\Gamma_0$ and the first term of $\Gamma_W$ arise because of the off-resonant coupling of the laser 16 from $|0 \ldots 0\rangle$ and $|W\rangle$ to polaritons with a finite lifetime. The second term in $\Gamma_W$ arises because at a finite value of $\Omega$ the blockade effect is imperfect and some population gets transferred from $|W\rangle$ to lossy states with n = 2.

A $|W\rangle$ state can now be generated by applying $\Omega(t) = \Omega_0 exp\left(-i\frac{\eta^2 \Delta}{4g^2}t\right)$ for a duration $T = \frac{\pi}{\sqrt{N}\Omega_0}$. During the course of the gate the system will spend time $\frac{T}{2}$ in state $|0 \ldots 0\rangle$ and time $\frac{T}{2}$ in state $|W\rangle$, so that the gate error is given by $1 - F = T\frac{\Gamma_0 + \Gamma_W}{2}$. The values of $\Omega$, $\delta$ and $\Delta$ that minimize the infidelity are given by:

$$\Delta = \left(\frac{8}{5}\right)^{\frac{1}{4}}\sqrt{\frac{\gamma}{2\kappa}}g \text{ and } \frac{\eta^2}{\Omega} = \sqrt{\frac{(N-1)\kappa}{2\gamma}}g$$

With these values an infidelity:

$$1 - F = \pi\sqrt{\frac{\left(1-\frac{1}{N}\right)\left(\sqrt{\frac{5}{8}}+\frac{7}{8}\right)}{C}} \approx 5.73\sqrt{\frac{\left(1-\frac{1}{N}\right)}{C}}$$

is achieved in the $C \to \infty$ limit.

Note that interestingly the gate error is limited by $5.73\sqrt{\frac{1}{C}}$ in the $N \to \infty$ case, so that the blockade approach allows the generation of arbitrarily large W-states with a fixed fidelity.

The blockade approach can also be used to implement a CZ or a C2Z gate instead of generating a W-state. For this, an additional state $|1'\rangle$ is available for each atom, so that the computational subspace is not spanned by $|0\rangle$ and $|1\rangle$ anymore, but instead by $|0\rangle$ and $|1'\rangle$. The state $|1'\rangle$ does not couple to any other state and just serves to complete the computational subspace. Just as for the generation of the W-state, it can be analysed the fidelity of this approach (see the section "simulations and calculations") and find that the minimal gate error is given by $1 - F = \frac{6.48}{\sqrt{C}}$ for the CZ and $1 - F = \frac{21.84}{\sqrt{C}}$ for the C2Z gate.

These results show that it is advantageous that the amplitude and the frequency of the driving wave being shaped so that each parameter of a second set is superior to 10 times each parameter of a first set.

In the present case, the first set consists of the Rabi frequency of the coupling wave, the photon excitation rate of the trap driver 16, the lifetime of the $|e\rangle$ state and the lifetime of the excitation mode.

The second set consists of the detuning between the frequency of the driving wave and the frequency of the transition between the $|1\rangle$ state and the $|e\rangle$ state, the detuning between the frequency of the driving wave and the frequency of the excitation mode, the strength of the coupling between the $|1\rangle$ state and the $|e\rangle$ state and the parameter

$\frac{\eta^2}{\Omega}$.

In addition or in variant, it is preferable that the trap driver 16 drives the cavity 18 with a detuning $\delta$ between the frequency of the driving wave and the frequency of the excitation mode given by:

$$\delta = \frac{2g^2}{\Delta}.$$

The driving wave may also to be shaped to obtain a parameter $\frac{\eta^2}{\Omega}$ given by:

$$\frac{\eta^2}{\Omega} = \sqrt{\frac{(N-1)\kappa}{2\gamma}}\, g\,.$$

The driving wave may also to be shaped with a detuning from the frequency of the transition between the $|1\rangle$ state and the $|e\rangle$ state given by:

$$\Delta = \left(\frac{8}{5}\right)^{1/4} \sqrt{\frac{\gamma}{2\kappa}}\, g$$

This enables to generated a blockade effect in the system, thereby enabling to achieve a deterministic non-local quantum gate.

*GENERAL CONCLUSION*

The potential to extract quantum advantage from current quantum computers is significantly hampered by low qubit connectivity. A promising platform that allows for all-to-all connectivity is given by neutral atoms trapped in a cavity. Since all atoms couple to the same cavity mode, atoms can be entangled regardless of their distance.

Two new approaches to deterministically implement multi-qubit quantum gates for neutral atoms trapped in a cavity are proposed in the present invention.

The first approach is based on adiabatic evolution of the cavity state, the second approach makes use of the blockade effect. In both approaches the cavity can be driven with a classical laser pulse and no photon detectors are needed.

The advantage compared to approaches which drive atomic transition lies in their simplicity and robustness. Since the atoms are not driven by the laser there is no need for individual addressing, thus significantly reducing the experimental complexity.

Furthermore, both approaches are inherently insensitive to amplitude and frequency noise in the laser driving the cavity.

The fidelity is limited by spontaneous emission and cavity loss, which are quantified by the cooperativity C of the cavity. For both approaches, $\sqrt{C}$, a behavior which has been observed for all deterministic implementations of quantum gates in cavities.

It is thus proposed new ways of generating non-local gates and entangling operations for neutral atoms, which is a long sought-after goal in the field of quantum computing and others, e.g. quantum metrology. There are two different ways of controlling the joint atom-cavity system: One can either drive electronic transitions in the atoms or the cavity mode. Many protocols where lasers are used to drive atomic transitions have been proposed (see also patent below). The alternative way of driving the cavity instead of the atoms has received significantly less attention. Existing proposals either only create an entangled state probabilistically or require single photon sources or unit efficiency single photon detectors, which are not readily available. This invention proposes to deterministically implement multi-qubit quantum gates by driving the cavity.

It has thus been described a device adapted to implement a deterministic quantum gate with a good efficiency at lowest hardware cost.

The described devices 10 could be integrated into an architecture to support fault tolerant quantum computation. Consider a device 10 where each register qubit $q_j$ has one or more neighbouring ancillary qubits $b_j$ that are spatially and spectroscopically addressable. A useful primitive gate is the non-local measurement of a Pauli operator with support on a set of locations S = $\{s_k\}$ of distantly separated register qubits $\{q_{s_k}\}$. This could be used e.g. for a stabilizer measurement or a non-destructive Pauli measurement gate in an LDPC code. Such a measurement could be performed via the Shor scheme using a resource GHZ state on the set of ancilla $\{a_{s_k}\}$ This state could be prepared via the first embodiment, and the remaining ancilla controlled gates targeting the register qubits would be spatially local. The usual GHZ state verification steps would themselves be non-local, but errors in the preparation can be accounted for by unpreparing the GHZ state, which is feasible since the described method is unitary, and measuring the ancilla qubits to infer errors which can be accounted for by adapting the Pauli frame of the computation.

Furthermore, this method can be made more robust by redundifying the GHZ state locally with CNOT gates at the ancilla locations before the controlled operations acting on the register qubits.

**SIMULATIONS AND CALCULATIONS**

So as to avoid any confusion, any element pertaining to this part will be provided with a SC in its reference.

Before entering into details of the simulations and calculations, the figures associated to this part, which are figures 5 to 8< are briefly described hereinafter.

In figure 5, it is represented errors affecting the implementation of a CZ gate at $\gamma = \kappa = 10^{-2}g$ as a function of the pulse duration T. The total error consists of the errors induced by the decay of the photons and $|e\rangle$ and of the diabatic error resulting from the finite rate of change of $\eta$. The parameters $\Delta$, $\delta$ and $\eta(t)$ are chosen to minimize the total error. The two dashed horizontal lines show the analytic calculation of the error in the limit $\Delta \to \infty$.

Figure 6 corresponds to the optimal choice of $\Delta$ as a function of T for the same choice of parameters as in a.

Figure 7 represents Infidelity 1 - F as a function of cooperativity C for different ratios $\frac{\gamma}{\kappa}$ starting with the full-Hamiltonian, with $\eta_0$ chosen according to the gate condition. $\Delta$ = 100g and the pulse duration time T large enough that the error due to nonadiabaticity is negligible as compared to error from photon losses.

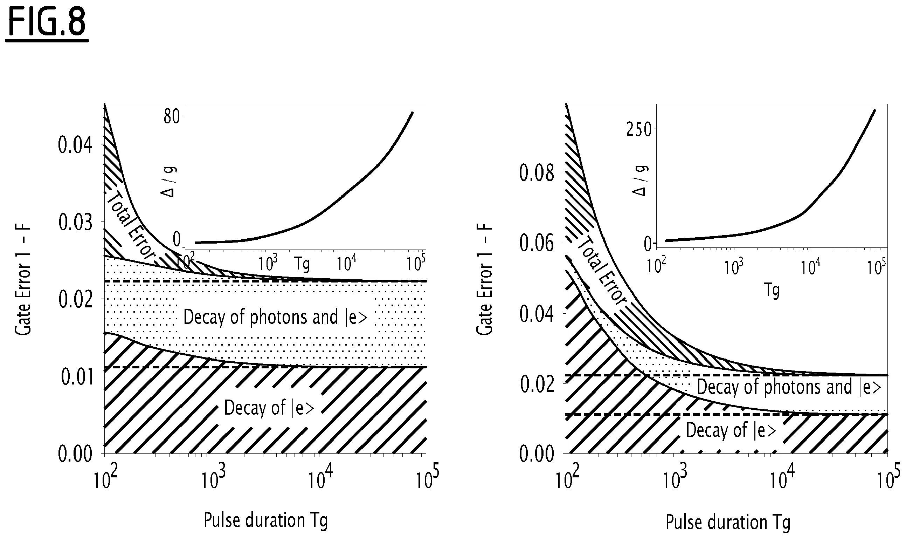

Figure 8 shows the decomposition of the total gate error into the error induced by the decay of $|e\rangle$, the decay of photons and the diabatic error:

a) for $\gamma = \frac{g}{\sqrt{10}}, \kappa = \sqrt{10}g$ (left part of the figure) and

b) for $\gamma = \sqrt{10}g$ and $\kappa = \frac{g}{\sqrt{10}}$ (right part of the figure)

The insets show the optimal value of $\Delta$ as a function of T.

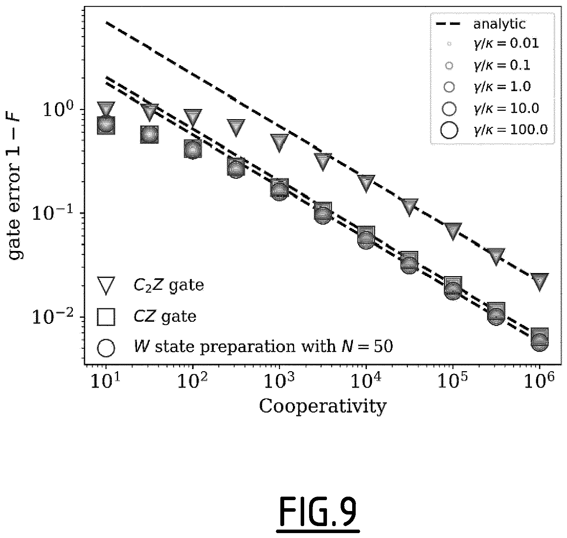

Figure 9 shows the error as a function of Cooperativity C for W state preparation with $N$ = 50, CZ gate and C2Z gate. The dashed lines represent the analytically calculated errors (in the limit where pulse duration $T \to \infty$) which scale

as $5.73 \frac{\sqrt{1-\frac{1}{N}}}{\sqrt{C}}$, $\frac{6.4}{\sqrt{C}}$ and $\frac{21.7}{\sqrt{C}}$ for $N$ body $W$ state preparation, CZ and C2Z gate respectively. The numerical points are obtained by simulating the full Hamiltonian for $\frac{\gamma}{\kappa} = 0.01, 0.1, 1, 10, 100$ for a fixed pulse duration of $gT = 10^8$.

_SC-I. DETAILED DISCUSSION OF THE ADIABATIC APPROACH_

_SC-IA. Error composition_

In Fig. 1 of the in the part "description of a preferred embodiment", the decomposition of the gate error into the diabatic error and the error induced by the decay of $|e\rangle$ and the photons are shown. In this part, these calculations are detailed. It is assumed a pulse shape $\eta(t)$ of the form:

$$\eta(t) = \begin{cases} \eta_0 sin^2(\varepsilon t) \: if \: t < \dfrac{\pi}{2\varepsilon} \\[2mm] \eta_0 \: if \: t \in \left[\dfrac{\pi}{2\varepsilon}, T - \dfrac{\pi}{2\varepsilon}\right] \\[2mm] \eta_0 sin^2\big(\varepsilon(T - t)\big) \: if \: t > T - \dfrac{\pi}{2\varepsilon} \end{cases} \qquad (SC\text{-}1)$$

where $\varepsilon$ is a parameter controlling the adiabadicity of the pulse and is superior to $\dfrac{\pi}{T}$

For a given set of parameters $g$, $\gamma$, $\kappa$, $T$, $\Delta$, $\delta$ and $\varepsilon$, $\eta_0$ is found by requiring that a CZ gate would be implemented if they $= \kappa = 0$ and if the states would always exactly follow the eigenstates of $H$. This means that $\eta_0$ is chosen such that:

$$\int_0^T \big(E_2(t) - 2E_1(t) + E_0(t)\big) dt = \pi \quad (SC\text{-}2)$$

where $E_n$ is the groundstate of $H$ in the sector with $n$ atoms in either the $|1\rangle$ or the $|e\rangle$ state.

The error due to the decay of the photons is calculated by adding a jump operator $L = \sqrt{\kappa}a$ and numerically solving the Lindblad master equation

$$\dot{\rho} = -i[H, \rho] + L^\dagger \rho L - \frac{1}{2}\{L^\dagger L, \rho\} \quad (SC\text{-}3)$$

The error is then given by:

$$1 - F = 1 - \langle \psi_0 | U^\dagger \rho U | \psi_0 \rangle$$

where $\left| \psi_0 \right\rangle = \frac{1}{2}\Sigma_q |q\rangle$ and $U$ is the unitary implemented in the decay free case.

The error due to the decay of $|e\rangle$ is calculated by adding a nonhermitian term

$$H_{nh} = -i\frac{\gamma}{2}\sum_j |e_j\rangle\langle e_j|$$

to the Hamiltonian. This approach gives the same error as a full treatment of the Lindblad master equation if the decay of $|e\rangle$ goes outside of the computational subspace, otherwise it gives an upper bound for the gate error.

$$1 - F \approx \frac{\epsilon_0 + 2\epsilon_1 + \epsilon_2}{4}$$

The diabatic error is approximated as where $\varepsilon_n$ is the error in the case of starting with n atoms in the $|1\rangle$ state, given by :

$$\epsilon_n \approx \frac{max_t \left( \left\langle v_1 \left| \dot{H}_n \right| v_0 \right\rangle \right)}{min_t \big( \langle v_1 | H | v_1 \rangle - \langle v_0 | H | v_0 \rangle \big)^2} \quad (SC\text{-}4)$$

Where:

- $|v_0\rangle$ and $|v_1\rangle$ are the ground state and the first excited state of $H_n$, respectively, and
- $H_n$ is the derivative of $H_n$ with respect to time, $H_n$ being the Hamiltonian in the block with n atoms in $|1\rangle$ state or $|e\rangle$ state.

For a given $g$, $\gamma$, $\kappa$ and $T$, the total error is numerically minimized over $\Delta$, $\delta$ and $\varepsilon$. The results for $\gamma = \kappa = 10^{-2}g$ are shown in figure 5. In figure 7, the results are shown for $\gamma = \dfrac{g}{\sqrt{10}}, \kappa = \sqrt{10}g$ and $\gamma = \sqrt{10}g$ and $\kappa = \dfrac{g}{\sqrt{10}}$ in the same way.

*SC-IB. Adiabatic elimination of $|e\rangle$*

The full Hamiltonian of the atoms and the cavity 18 is given by:

$$H(t) = \sum_{j=1}^{N}\left(\Delta|e_j\rangle\langle e_j| + g\left(|e_j\rangle\langle 1_j|a + |1_j\rangle\langle e_j|a^\dagger\right)\right) + \delta a^\dagger a + i\eta\left(a^\dagger - a\right) \text{ (SC-5)}$$

where the shorthand notation $|x_j\rangle\langle y_j| = id\otimes...\otimes id\otimes|x\rangle\langle y|\otimes id\otimes...\otimes id$ is used with the operator $|x_j\rangle\langle y_j|$ acting on the j-th atom.

In the regime $\Delta \gg g, \delta, \eta$, it can be performed a Schrieffer-Wolff (SW) transformation to adiabatically eliminate the $|e\rangle$ states. The goal of the SW transformation is to find a basis transformation $e^S$ such that the Hamiltonian H' = $e^{-S}He^S$ after the transformation is block-diagonal. Here block-diagonal means that

$$H' = PH'P + (id - P)H'(id - P)$$

where $P = \prod_{i=1}^{N}\left(id - |e_j\rangle\langle e_j|\right)$ is the projector onto the subspace with no atoms in $|e\rangle$. $H = H_0 + V_{od} + V_d$ is decomposed with:

$$H_0 = \Delta\sum_{j=1}^{N}|e_j\rangle\langle e_j| \text{ (SC-6)}$$

$$V_{od} = g\sum_{j=1}^{N}|e_j\rangle\langle 1_j|a + |1_j\rangle\langle e_j|a^\dagger \text{ (SC-7)}$$

$$V_d = \delta a^\dagger a + i\eta\left(a^\dagger - a\right) \text{ (SC-8)}$$

Here $H_0$ denotes the part of $H$ which is proportional to $\Delta$, $V_{od}$ denotes the block-off-diagonal part of $H - H_0$ and $V_d$ denotes the block-diagonal part of $H - H_0$. $S = \sum_{k=1}^{\infty} s^{(k)}$ where $s^{(k)}$ denotes the part of S which is of order $\Delta^{-k}$ can also be expanded.

It can be shown that $S^{(1)}$ and $S^{(2)}$ are given by the solution of:

$$\left[H_0, S^{(1)}\right] = -V_{od} \text{ (SC-9)}$$

$$\left[H_0, S^{(2)}\right] = -\left[V_d, S^{(1)}\right] \text{ (SC-10)}$$

and *H'* is given by:

$$H' = H_0 + V_{od} + V_d + \frac{1}{2}\left[V_d, S^{(1)}\right] + \frac{1}{2}\left[V_d, S^{(2)}\right] + \mathcal{O}(\Delta^{-3}) \quad \text{(SC-11)}$$

Here and in the following the notation $\mathcal{O}(\Delta^{-k})$ is to be understood in the limit $\Delta \to \infty$ while g, $\delta$ and $\eta$ are kept fixed. Note that because $V_d$ is time-independent the results for a time-dependent and a time-independent SW transformation agree up to and including the second order of $1/\Delta$.

Solving equations (SC-9) and (SC-10) gives:

$$S^{(1)} = \frac{g}{\Delta}\sum_{j=1}^{N}\left(-|e_j\rangle\langle 1_j|a + |1_j\rangle\langle e_j|a^\dagger\right) \quad \text{(SC-12)}$$

$$S^{(2)} = \frac{g\delta}{\Delta^2}\sum_{j=1}^{N}\left(-|e_j\rangle\langle 1_j|a + |1_j\rangle\langle e_j|a^\dagger\right) + \frac{ig\eta}{\Delta^2}\left(-|e_j\rangle\langle 1_j| + |1_j\rangle\langle e_j|\right) \quad \text{(SC-13)}$$

With this and equation (SC-11), the effective Hamiltonian $H_{eff} = PH'P$ can be expressed as:

$$H_{eff} = \left(\delta + \frac{g^2}{\Delta}\hat{n} + \frac{g^2\delta}{\Delta^2}\hat{n}\right)a^\dagger a + i\eta\left(1 - \frac{g^2}{2\Delta^2}\hat{n}\right)(a^\dagger - a) + \mathcal{O}(\Delta^{-3}) \quad \text{(SC-14)}$$

*SC-IC. Decay-Free analysis of the gate*

To implement a quantum gate, the parameters $\Delta$, g, and $\delta$ are kept fixed and a pulse $\eta(t)$ of duration T is applied on the laser 16. The pulse must satisfy $\eta(0) = \eta(T) = 0$ and $\eta$ must change slow enough so that the state adiabatically follows the eigenstates of H (see below). To analyze the action of such a pulse, it is assumed that the system starts in a state $|\psi(0)\rangle = |q\rangle \& |0\rangle$ where $|q\rangle$ with $q \in \{0, 1\}^N$ denotes a computational basis state and $|0\rangle$ denotes the ground state of the cavity 18. The effective Hamiltonian can be decomposed as

$$H_{eff}(t) = \sum_{q\in\{0,1\}^N}|q\rangle\langle q|\otimes H_{n_q}(t) \quad \text{(SC-15)}$$

where $n_q = \Sigma_j q_j$ is the number of ones in q and the different $H_n$ act on the cavity 18 only and are given by

$$H_n = \delta_n a^\dagger a + i\eta_n(a^\dagger - a) + \mathcal{O}(\Delta^{-3})$$ with $\delta_n = \delta - \left(\frac{g^2}{\Delta} + \frac{g^2\delta}{\Delta^2}\right)n$ and $\eta_n = \eta(t)\left(1 - \left(\frac{g^2}{2\Delta^2}\right)n\right)n$ .

The groundstate of $H_n(t)$ is given by the coherent state $|\alpha_n(t)\rangle$ with $|\alpha_n(t)\rangle = -i\frac{\eta_n(t)}{\delta_n}$ and

$$H_n|\alpha_n(t)\rangle = -i\frac{\eta_n(t)^2}{\delta_n}|\alpha_n(t)\rangle$$ . If $\eta(t)$ changes slowly enough then by the adiabatic theorem the state $|\psi(t)\rangle$ is given by:

$$\psi(t) = e^{i\phi_n(t)}|q\rangle\otimes|\alpha_n(t)\rangle \quad \text{(SC-16)}$$

with

$$\phi_n(t) = \int_0^T\left(\frac{\eta_n(t)^2}{\delta_n} - Im\left(\langle\alpha_n(t)|\frac{d|\alpha_n(t)\rangle}{dt}\right)\right)dt \quad \text{(SC-17)}$$

Since $\eta_n(t)$ is real the geometrical phase $Im\left(\langle\alpha_n(t)|\frac{d|\alpha_n(t)\rangle}{dt}\right)$ vanishes and it is simply obtained:

$$\phi_n(t) = \int_0^T \frac{\eta_n(t)^2}{\delta_n} dt = I \frac{\left(1-\left(\frac{g^2}{2\Delta^2}\right)n\right)^2}{\delta-\left(\frac{g^2}{\Delta}+\frac{g^2\delta}{\Delta^2}\right)n} + \mathcal{O}(\Delta^{-3}) = \frac{I}{\delta}\left(1+\frac{g^2}{\Delta\delta}n+\frac{g^4}{\Delta^2\delta^2}n^2\right) + \mathcal{O}(I\Delta^{-3}) \quad \text{(SC-18)}$$

where $I = \int_0^T \eta(t)\,dt$ .

The unitary implemented on the computational subspace is then given by:

$$U = \sum_{q\in\{0,1\}^N} e^{i\phi_n(t)}|q\rangle\langle q| \quad \text{(SC-19)}$$

By applying single qubit rotations around the z axis it is possible to implement the unitary $P\Sigma_q e^{i\beta n_q}|q\rangle\langle q|$ for any angle $n_q$, so that $U$ is, up to single qubit gates and single qubit rotations, equivalent to:

$$U' = \sum_{q\in\{0,1\}^N} exp\left[i\left(\theta n_q^2 + \mathcal{O}(I\Delta^{-3})\right)\right]|q\rangle\langle q| = exp\left[i\left(\theta\hat{n}^2 + \mathcal{O}(I\Delta^{-3})\right)\right]$$

$$\text{(SC-20)}$$

With $\theta = \frac{Ig^4}{\Delta^2\delta^3}$ .

Since then $I = \frac{\theta\delta^3}{g^4}\Delta^2$ , the $\mathcal{O}(I\Delta^{-3})$ vanishes in the limit $\Delta\to\infty$. Notably, if only $N=2$ case is considered, it can be implemented an exact $exp\,(i\theta\hat{n}^2)$ gate even for finite $\Delta$. For this, I has to be found by taking higher order terms in $\Delta$ into account, which can be easily achieved numerically.

For the adiabatic theorem to hold $\eta(t)$ must change slowly enough. How slowly is given by gap between the groundstate and the first excited state of $H_n$. The first excited state of $H_n$ is given by $(a^\dagger - a)|\alpha_n\rangle$ with energy $\delta_n - \frac{\eta_n^2}{\delta_n}$, so the gap between the groundstate and the first excited state is simply $\delta_n$. The system adiabatically follows the groundstate of $H_n$ if $\eta \ll \delta_n^2$. A possible choice for $\eta(t)$ is:

$$\eta(t) = \begin{cases} \eta_0 sin^2(\varepsilon t) & if\ t < \frac{\pi}{2\varepsilon} \\ \eta_0 & if\ t \in \left[\frac{\pi}{2\varepsilon}, T-\frac{\pi}{2\varepsilon}\right] \\ \eta_0 sin^2\big(\varepsilon(T-t)\big) & if\ t > T-\frac{\pi}{2\varepsilon} \end{cases} \quad \text{(SC-21)}$$

which leads to $I = \int_0^T \eta(t)^2\,dt = \eta_0^2\left(T-\frac{5\pi}{8\varepsilon}\right)$ . Here, $\eta_0$ must be chosen such that the condition $\Delta \gg \eta$ for

the adiabatic elimination of $|e\rangle$ is satisfied, $\varepsilon$ must be chosen such that $\varepsilon \ll \dfrac{\delta^2}{\eta_0}$ and $T$ much be chosen so that

$$I = \frac{\theta\delta^3}{g^4}\Delta^2$$

### SC-ID. Infidelity due to Decay of $|e\rangle$

In this section, the infidelity due to the decay of the $|e\rangle$ states is calculated. In the next section, it will then be calculated the infidelity due to the finite linewidth of the cavity 18.

The finite lifetime of $|e\rangle$ is calculated through an additional nonhermitian Hamiltonian:

$$H_{nh} = -i\frac{\gamma}{2}\sum_j |e_j\rangle\langle e_j|$$

This corresponds to assigning the gate a fidelity of 0 once a decay event occurs. If the decay of $|e\rangle$ does not repopulate the $|0\rangle$ or $|1\rangle$ state this treatment gives the exact infidelity, otherwise it gives an upper bound of the infidelity. As a measure of fidelity, the Bell state fidelity is used. It is given by:

$$F = \left|\langle\psi_0|U_{ideal}^\dagger U_{decay}|\psi_0\rangle\right|^2$$

Where:

- $|\psi_0\rangle = 2^{-N/2}\sum_{q\in\{0,1\}^N}|q\rangle$,
- $U_{ideal}$ is the time evolution operator under $H$, and
- $U_{decay}$ is the time evolution operator under $H + H_{nh}$.

Denote by $U(t_1, t_2)$ the time evolution operator from $t_1$ to $t_2$ under $H$, so that:

$$U_{ideal} = U(0,T)$$

Then to first order in $\gamma$ it holds that:

$$U_{decay}|\psi_0\rangle = U(0,T)|\psi_0\rangle - i\int_0^T U(t,T)\,H_{nh}U(0,T)|\psi_0\rangle dt \quad \text{(SC-22)}$$

so that:

$$\langle\psi_0|U_{ideal}^\dagger U_{decay}|\psi_0\rangle = 1 - i\int_0^T \langle\psi_0|U(t,T)^\dagger U(t,T)H_{nh}U(0,T)|\psi_0\rangle U(t,T)\,H_{nh}U(0,T)|\psi_0\rangle dt$$

$$\text{(SC-23)}$$

And:

$$\langle\psi_0|U_{ideal}^\dagger U_{decay}|\psi_0\rangle = 1 - \frac{\gamma}{2}\int_0^T \langle\psi(t)|\sum_j |e_j\rangle\langle e_j|\,|\psi(t)\rangle U(t,T)\,H_{nh}U|\psi(t)\rangle dt$$

$$\text{(SC-24)}$$

where for the second equality |ψ(t)⟩ = $U$(0,$t$)|ψ₀⟩ is introduced and

$$U(t,T)^{\dagger}U(t,T) = U(0,T)^{\dagger}$$

is also used. Hence, it comes:

$$1 - F = \gamma \int_0^T \langle\psi(t)| \sum_j |e_j\rangle\langle e_j| \, |\psi_0\rangle U(t,T) \, H_{nh} U|\psi(t)\rangle dt + \mathcal{O}(\gamma^2) \text{ (SC-25)}$$

Undoing the SW transformation from section SC-IB and using the solution from section SC-IC, it can be found:

$$|\psi(t)\rangle = 2^{-N/2} \sum_q e^{i\phi_{n_q}(t)} e^{-S}|q\rangle \otimes |\alpha_n(t)\rangle \text{ (SC-26)}$$

Direct inspection shows that to lowest order in 1/Δ:

$$\langle\psi(t)| \sum_j |e_j\rangle\langle e_j| \, |\psi(t)\rangle = 2^{-N} \sum_q \langle q| \otimes \langle\alpha_{n_q}(t)|S^{(1)} \sum_j |e_j\rangle\langle e_j| \left(-S^{(1)}\right) |q\rangle \otimes |\alpha_{n_q}(t)\rangle + \mathcal{O}(\Delta^{-3}) \text{ (SC-27)}$$

And

$$\langle\psi(t)| \sum_j |e_j\rangle\langle e_j| \, |\psi(t)\rangle = 2^{-N} \frac{g^2}{\Delta^2} \sum_q n_q \langle\alpha_{n_q}(t)|a^\dagger a|\alpha_{n_q}(t)\rangle + \mathcal{O}(\Delta^{-3}) \text{ (SC-28)}$$

This leads to:

$$\langle\psi(t)| \sum_j |e_j\rangle\langle e_j| \, |\psi(t)\rangle = 2^{-N} \frac{g^2}{\Delta^2} \sum_q n_q \frac{\eta(t)^2}{\delta^2} + \mathcal{O}(\Delta^{-3}) \text{ (SC-29)}$$

And:

$$\langle\psi(t)| \sum_j |e_j\rangle\langle e_j| \, |\psi(t)\rangle = \frac{N}{2} \frac{g^2\eta(t)^2}{\Delta^2\delta^2} + \mathcal{O}(\Delta^{-3}) \text{ (SC-30)}$$

Plugging this into equation (25) gives:

$$1 - F = \frac{N}{2} \frac{\gamma g^2 I}{\Delta^2\delta^2} = \frac{\theta N}{2} \frac{\gamma\delta}{g^2} \text{ (SC-31)}$$

where the definition $I = \int_0^T \eta(t)^2 \, dt$ and the condition $I = \frac{\theta\delta^3}{g^4}\Delta^2$ are used

*SC-IE. Infidelity due to decay of photons in the cavity 18*

The second source or error is the finite linewidth $\kappa$ of the cavity 18. To calculate this error, a solution to the Lindblad equation is searched:

$$\rho = -i\left[H_{eff}, \rho\right] + L\rho L^\dagger - \frac{1}{2}\{L^\dagger L, \rho\} \quad \text{(SC-32)}$$

with the jump operator $L = \sqrt{\kappa}a$. The initial state is given by:

$$\rho(0) = 2^{-N} \sum_{q,q' \in \{0,1\}^N} |q\rangle\langle q'| \otimes |0\rangle\langle 0| \quad \text{(SC-33)}$$

where the first term in the tensor product describes the state of the atoms and the second term describes the state of the cavity 18. It is made the Ansatz

$$\rho(t) = 2^{-N} \sum_{q,q' \in \{0,1\}^N} |q\rangle\langle q'| \otimes \rho_{n_q, n_{q'}}(t) \quad \text{(SC-34)}$$

With :

- $\rho_{nm}(t) = c_{nm}(t)|\beta_n(t)\rangle\langle\beta_n(t)|$ (SC-35) where the functions $c_{nm}(t)$ and $\beta_n(t)$ are not yet known.

A-priori it is not clear that the solution to equation (SC-32) is of that form, but solutions $c_{nm}(t)$ and $\beta_n(t)$ will now be constructed to show that the Ansatz indeed satisfies equation (SC-32).

First it is calculated:

$$-i\left[H_{eff}, \rho\right] + L\rho L^\dagger - \frac{1}{2}\{L^\dagger L, \rho\} = 2^{-N} \sum_{q,q'} |q\rangle\langle q'| \otimes \mathcal{L}_{n_q, n_{q'}}\left(\rho_{n_q, n_{q'}}(t)\right) \quad \text{(SC-36)}$$

With:

- 
$$\mathcal{L}_{nm}(\rho_{nm}) = -iH_n\rho_{nm} + iH_m\rho_{nm} + L\rho_{nm}L^\dagger - \frac{1}{2}\{L^\dagger L, \rho_{nm}\} \quad \text{(SC-37)}$$

The individual terms can be calculated as:

- 
$$\frac{H_n\rho_{nm}}{c_{nm}} = \delta_n\beta_n a^\dagger|\beta_n\rangle\langle\beta_m| + i\eta_n a^\dagger|\beta_n\rangle\langle\beta_m| - i\eta_n\beta_n|\beta_n\rangle\langle\beta_m| \quad \text{(SC-38)}$$

- 
$$\rho_{nm}\frac{H_m}{c_{nm}} = \delta_m\beta_m^* a^\dagger|\beta_n\rangle\langle\beta_m|a - i\eta_m|\beta_n\rangle\langle\beta_m|a + i\eta_m\beta_m^*|\beta_n\rangle\langle\beta_m| \quad \text{(SC-39)}$$

- 
$$\frac{L\rho_{nm}L^\dagger}{c_{nm}} = \kappa\beta_n\beta_m^* a^\dagger|\beta_n\rangle\langle\beta_m| \quad \text{(SC-40)}$$

- 
$$\frac{\{L^\dagger L, \rho_{nm}\}}{c_{nm}} = \kappa\beta_n a^\dagger|\beta_n\rangle\langle\beta_m| + \kappa\beta_m^*|\beta_n\rangle\langle\beta_m|a \quad \text{(SC-41)}$$

Plugging equations (SC-38)-(SC-41) into equation (SC-37) gives:

$$\mathcal{L}_{nm}\left(\rho_{nm}\right) = c_{nm}\left(-i\delta_n\beta_n + \eta_n - \frac{\kappa\beta_n}{2}\right)a^\dagger\left|\beta_n\right\rangle\left\langle\beta_m\right| + c_{nm}\left(i\delta_m\beta_m^* + \eta_m - \frac{\kappa\beta_m^*}{2}\right)\left|\beta_n\right\rangle\left\langle\beta_m\right|a + c_{nm}\left(-\eta_n\beta_n + \eta_m\beta_m^* - \right.$$

$$\left. \kappa\beta_n\beta_m^*\right)\left|\beta_n\right\rangle\left\langle\beta_m\right| \text{ SC- (42)}$$

After having calculated the right side of equation (32) for the Ansatz (34), the left side $\rho$ is now calculated. It is a property of coherent states that:

$$\frac{d}{dt}\left|\dot{\beta}_n(t)\right\rangle = \beta_n\, a^\dagger\left|\beta_n\right\rangle - \frac{1}{2}\frac{d|\beta_n|^2}{dt}\left|\beta_n\right\rangle \text{ (SC-43)}$$

so that

$$\dot{\rho}_{nm} = c_{nm}\dot{\beta}_n a^\dagger\left|\beta_n\right\rangle\left\langle\beta_m\right| + c_{nm}\dot{\beta}_m^*\left|\beta_n\right\rangle\left\langle\beta_m\right|a + \left(\dot{c}_{nm} - \frac{c_{nm}}{2}\frac{d\left(|\beta_n|^2 + |\beta_m|^2\right)}{dt}\right)\left|\beta_n\right\rangle\left\langle\beta_m\right| \text{ (SC-}$$

44)

Equating equation (SC-43) and equation (SC-44) shows that the Ansatz (SC-34) satisfies the Lindblad equation (SC-32) if and only if:

$$\dot{\beta}_n = -i\delta_n\beta_n + \eta_n - \frac{\kappa\beta_n}{2} \text{ (SC-45)}$$

$$\dot{\beta}_m^* = \delta_m\beta_m^* + \eta_m - \frac{\kappa\beta_m^*}{2} \text{ (SC-46)}$$

$$\frac{\dot{c}_{nm}}{c_{nm}} = \frac{1}{2}\frac{d\left(|\beta_n|^2 + |\beta_m|^2\right)}{dt} - \eta_n\beta_n + \eta_m\beta_m^* - \kappa\beta_n\beta_m^* \text{ (SC-47)}$$

Note that equation (SC-46) is just the complex conjugate of equation (SC-45), so that it is sufficient if equation (SC-45) is satisfied for all n. Equation (SC-47) can be simplified through a change of variable. The complex function $\phi_{nm}(t)$ is introduced through:

$$c_{nm}(t) = e^{i\phi_{nm}(t)}e^{\frac{1}{2}\left(|\beta_n|^2 + |\beta_m|^2\right) - \beta_n\beta_m^*} \text{ (SC-48)}$$

Then it comes:

$$i\dot{\hat{\phi}}_{nm} = \frac{\dot{c}_{nm}}{c_{nm}} - \frac{d}{dt}\left(\frac{1}{2}\left(|\beta_n|^2 + |\beta_m|^2\right) - \beta_n\beta_m^*\right) \text{ (SC-49)}$$

And:

$$i\dot{\hat{\phi}}_{nm} = -\eta_n\beta_n + \eta_m\beta_m^* - \kappa\beta_n\beta_m^* + \dot{\beta}_m^*\beta_n + \beta_m^*\dot{\beta}_n \text{ (SC-50)}$$

leading to:

$$i\hat{\phi}_{nm} = (\eta_m - \eta_n)(\beta_n - \beta_m^*) + i(\delta_m - \delta_n)\beta_m^*\beta_n \text{ (SC-51)}$$

An additional advantage of that new parametrization is that now simply

$$tr(\rho_{nm}) = c_{nm}\langle\beta_m|\beta_n\rangle = e^{i\phi_{nm}} \text{ (SC-52)}$$

Now for arbitrary $\eta_\eta(t)$, the differential equation (45) can be solved and leads to:

$$\beta_n = -\int_0^t dt'\eta_n(t')e^{\left(-i\delta_n-\frac{\kappa}{2}\right)(t-t')} \text{ (SC-53)}$$

From this, it can calculated:

$$\phi_{nm}(t) = \int_0^t dt'\left(-i\left(\eta_m(t') - \eta_n(t')\right)\left(\beta_n(t') - \beta_m^*(t')\right) + (\delta_m - \delta_n)\beta_m^*(t')\beta_n(t')\right) \text{ (SC-54)}$$

with state of the atoms at the end of the gate as:

$$\rho_{atoms}(T) = tr_{cav}(\rho(T)) = 2^{-N}\sum_{q,q'}e^{i\phi_{nm}(T)}|q\rangle\langle q'| \text{ (SC-55)}$$

For the specific case where $\eta(t)$ changes slowly enough so that the system adiabatically follows the eigenstates of $H$ the $\beta_n$ follow the steady state solution given by plugging $\dot{\beta}_n = 0$ into equation (45):

$$\beta_n(t) = \frac{\eta_n(t)}{i\delta_n+\frac{\kappa}{2}} \text{ (SC-56)}$$

which leads to:

$$\beta_n(t) = -i\frac{\eta(t)}{\delta}\left(1 - \frac{g^2}{\Delta\delta}n\right) + \frac{\kappa\eta(t)}{2\delta^2}\left(1 - 2\frac{g^2}{\Delta\delta}n\right) + O(\Delta^{-3}) + O(\kappa^2) \text{ (SC-57)}$$

With this one finds through direct calculation:

$$\left(\eta_m(t') - \eta_n(t')\right)\left(\beta_n(t') - \beta_m^*(t')\right) = -i\frac{g^2\eta(t)^2}{\delta\Delta^2} + O(\Delta^{-3}) + O(\kappa^2) \text{ (SC-58)}$$

and:

$$(\delta_m - \delta_n)\beta_m^*(t')\beta_n(t') = \frac{g^2\eta(t)^2}{\delta^2\Delta}\left(1 + \frac{\delta}{\Delta}\right)(n - m) + \frac{g^4\eta(t)^2}{\Delta^2\delta^3}(n^2 - m^2) + i\frac{g^4\eta(t)^2\kappa}{2\Delta^2\delta^4}(n - m)^2 + O(\Delta^{-3}) + O(\kappa^2)$$

$$\text{(SC-59)}$$

so that:

$$\phi_{nm}(T) = \phi_{nm}^{(0)}(T) + i \int_0^T \frac{g^4 \eta(t)^2 \kappa}{2 \Delta^2 \delta^4}(n-m)^2 + O(\kappa^2) \text{ (SC-60)}$$

$$\phi_{nm}(T) = \phi_{nm}^{(0)}(T) + i \frac{lg^4 \kappa}{2 \Delta^2 \delta^4}(n-m)^2 \text{ (SC-61)}$$

$$\phi_{nm}(T) = \phi_{nm}^{(0)}(T) + i \frac{\theta}{2}\frac{\kappa}{\delta}(n-m)^2 \text{ (SC-62)}$$

Here, $\phi_{nm}^{(0)}(T)$ is the value of $\phi_{nm}(T)$ in the decay free case $\kappa = 0$. It is given by $\phi_{nm}^{(0)}(T) = \phi_m(T) - \phi_n(T)$, with $\phi_n$ and $\phi_m$ given by Eq (SC-18).

The infidelity of the gate is given by:

$$1 - F = \langle \psi^{(0)}(T) | \rho(T) | \psi^{(0)}(T) \rangle$$

Where:

$$\psi^{(0)}(T) = 2^{-N/2} \sum_q e^{i\phi_{n_q}(T)} |q\rangle$$

This leads to:

$$F = 2^{-2N} \sum_{q,q'} e^{i\left(\phi_{n_q, n_{q'}}(T) - \phi_{n_{q'}}(T) + \phi_{n_q}(T)\right)} \text{ (SC-63)}$$

$$F = 2^{-2N} \sum_{q,q'} e^{-\frac{\theta \kappa}{2\delta}(n_q - n_{q'})^2} \text{ (SC-64)}$$

$$F = 1 - \frac{\theta}{2}\frac{\kappa}{\delta} 2^{-2N} \sum_{q,q'}\left(n_q - n_{q'}\right)^2 + O(\kappa^2) \text{ (SC-65)}$$

$$F = 1 - \frac{N\theta}{4}\frac{\kappa}{\delta} + O(\kappa^2) \text{ (SC-66)}$$

Here in the last line, the following identity was used:

$$2^{-2N} \sum_{q,q'}\left(n_q - n_{q'}\right)^2 = 2^{-2N} \sum_{\substack{q_1,\ldots,q_N=0 \\ q'_1,\ldots,q'_N=0}}^{1}\left(q_1 + \cdots + q_N - q'_1 - \cdots - q'_N\right)^2 = \frac{N}{2}$$

(SC-67)

where the last identity follows through a straightforward expansion of the square.

*SC-II. DETAILED DISCUSSION OF THE BLOCKADE APPROACH*

In this section, a detailed discussion of the blockade approach is given and the asymptotic error given in the part "description of a preferred embodiment" is derived. The generation of a $|W\rangle$ state is first explained, which is discussed in sections SC-IIA to IIE, and then generalized to the implementation of a CZ and C2Z gate in section SC-IIF.

*SC-IIA. Problem Setup*

In the blockade approach, the following Hamiltonian, depending on parameters g, $\delta$, $\Delta$, $\eta$, $\Omega$, $\kappa$, $\gamma$ and a function $\varphi(\cdot)$ is considered:

$$H(t) = \left(\delta - i\tfrac{\kappa}{2}\right)a^\dagger a + \Sigma_j\left[\left(\Delta - i\tfrac{\gamma}{2}\right)|e_j\rangle\bar{e_j} + g(|e_j\rangle\langle 1_j|a + |1_j\rangle\langle e_j|a^\dagger)\right] + i\eta(a^\dagger - a) + \tfrac{\Omega}{2}(e^{i\varphi(t\Omega)}|0_j\rangle\langle 1_j| + e^{-i\varphi(t\Omega)}|1_j\rangle\langle 0_j|)$$ (SC-68-69)

Note that the phase of the coupling between $|0\rangle$ and $|1\rangle$ is defined as a function of the dimensionless quantity $\Omega t$ instead of the time.

The goal is to find the final state $|\psi\rangle$ after applying this Hamiltonian for a time T, starting in the initial state $|\psi_0\rangle = |0 \dots 0\rangle \otimes |0_{ph}\rangle$, where the first term describes the initial state of the spins, while the second term describes the initial state of the bosonic mode, containing no excitations.

For the following analysis, it is advantageous to define three new parameters $\zeta$, r and $\tau$, defined in terms of the previous parameters as $\zeta = \dfrac{\eta^2}{\Omega}, r = \dfrac{\gamma}{\kappa}$ and $\tau = T\Omega$.

It derives that $\eta = \sqrt{\zeta\Omega}$, $\gamma = r\kappa$ and $T = \dfrac{\tau}{\Omega}$.

Furthermore, $\delta = \dfrac{2g^2}{\Delta}$ is fixed.

For the remainder of this discussion, g, $\Delta$, $\zeta$, r, $\tau$ and $\varphi(\cdot)$ are considered as fixed and consider the joint limit $\Omega$, $\kappa \to 0$. No assumptions are made on how $\Omega$ and $\kappa$ tend to zero, i.e. given any sequence $(\Omega_j, \kappa_j)$ with $(\Omega_j, \kappa_j) \overset{j\to\infty}{\to} (0,0)$ all statements will hold in the limit $j \to \infty$, regardless of the exact sequence $(\Omega_j, \kappa_j)$.

In the remainder of this section will find $|\psi^{(0)}\rangle$ and $|\psi^{(1)}\rangle$ such that:

$$\left|\psi^{(0)}\right\rangle = \left|\psi^{(0)}\right\rangle + \kappa\left|\psi^{(1)}\right\rangle + \mathcal{O}\left(\sqrt{\Omega}\right) + \mathcal{O}\left(\kappa^2\right)$$

So that $|\psi^{(0)}\rangle$ gives the asymptotically achieved state, and $|\psi^{(1)}\rangle$ gives the first order correction in terms of $\kappa$.

*SC-IIB. The spectrum of the asymptotic Hamiltonian*

First, it is considered the Hamiltonian $H^{(0)} = \underset{\Omega,n\to 0}{lim} H$, given by:

$$H^{(0)} = \delta a^\dagger a + \Sigma_j[\Delta|e_j\rangle\langle e_j| + g(|e_j\rangle\langle 1_j|a + |1_j\rangle\langle e_j|a^\dagger)]$$ (SC-70)

The observables are also considered:

- $\hat{n} = \Sigma_j|1_j\rangle\langle 1_j| + |e_j\rangle\langle e_j|$, which measures the number of atoms in either $|1\rangle$ or $|e\rangle$, and

- $\hat{k} = \Sigma_j|e_j\rangle\langle e_j| + a^\dagger a$ which measures the sum of the number of atoms in $|e\rangle$ and the number of photons.

Since $[\hat{n}, \hat{k}] = 0$, the two observables can simultaneously diagonalized. Let denote by $\mathcal{H}_{n,k}$ the space of states $|\psi\rangle$ with $\hat{n}|\psi\rangle = n|\psi\rangle$ and $\hat{k}|\psi\rangle = k|\psi\rangle$. Note that $H^{(0)}$ is block-diagonal with respect to the $\mathcal{H}_{n,k}$.

Since $H$ and $|\psi_0\rangle$ and invariant under permutations of the spins, it is sufficient to consider the subspace of the Hilbert space which is invariant under permutation of the spins. A basis of this subspace is given by the states $|a_1 b_e k_{ph}\rangle$, with a, b, k ≥ 0 and a + b ≤ N. The state $|a_1 b_e k_{ph}\rangle$ denotes the equal superposition of all states with a spins in state 11), b atoms in state $|e\rangle$, the remaining N - a - b atoms in state 10), and k excitations in the bosonic mode. For example, the initial state is $|\psi_0\rangle = |0_1 0_e 0_{ph}\rangle$, the desired final $|W\rangle$ state is $|W\rangle = |0_1 0_e 0_{ph}\rangle$.

With this restriction to the permutation invariant subspace the only eigenstates of $H^{(0)}$ in $\mathcal{H}_{n,0}$ are the Dicke states $|D_n\rangle = |n_1 0_e 0_{ph}\rangle$, all with energy 0. The only eigenstate of $H^{(0)}$ in $\mathcal{H}_{0,1}$ is $|p_0^-\rangle = |0_1 0_e 1_{ph}\rangle$ with energy $\delta$. In the subspace $\mathcal{H}_{n,1}$ for n > 0 the Hamiltonian $H^{(0)}$ has the form:

$$H_{n+1}^{(0)} = \delta|n_1 0_e 1_{ph}\rangle\langle n_1 0_e 1_{ph}| + \Delta|(n-1)_1 1_e 0_{ph}\rangle\langle(n-1)_1 1_e 0_{ph}| + \sqrt{n}g\big(|n_1 0_e 1_{ph}\rangle\langle(n-1)_1 1_e 0_{ph}| + h.c.\big) \text{ (SC-71)}$$

The eigenstates of $H^{(0)}$ in $\mathcal{H}_{n,1}$ are thus two polaritons $|p_n^\pm\rangle$ with energy:

$$\varepsilon_n^\pm = \frac{1}{2}\Big[\Delta + \delta \pm \sqrt{(\Delta - \delta)^2 + 4ng^2}\Big] \text{ (SC-72)}$$

By the choice of $\delta = \frac{2g^2}{\Delta}$, it can be found that $\varepsilon_2^- = 0$, while $\varepsilon_2^+, \varepsilon_n^\pm \neq 0$ for all $n \neq 2$.

Since $H^{(0)}$ is the limit of H as $\Omega$, $\kappa \to 0$, the system is constrained in this limit to the subspace of energy 0 eigenstates of $H$, given by $\mathcal{H}_{eff} = span\Big(\{|D_n\rangle n\} \cup \big\{|p_2^-\rangle\big\}\Big)$.

$\Pi_{eff}$ denotes the projector onto $\mathcal{H}_{eff}$ and define $H^{(2)} = \Pi_{eff}(H - H^{(0)})\Pi_{eff}$ and $H^{(1)} = H - H^{(0)} - H^{(2)}$.

*SC-IIC. Adiabatic elimination of states outside of $\mathcal{H}_{eff}$:*

In this section, perturbation theory is used to find dressed states

$$\big|D_n\big\rangle$$

and

$$\big|p_2^-\big\rangle$$

with the two properties that:

i) $H$ is block-diagonal with respect to

$$span\left(\left\{\left|\bar{D_n}\right\rangle n\right\} \cup \left\{\left|\bar{p_2^-}\right\rangle\right\}\right)$$

and its complement, and ii)

$$\left|\bar{D_n}\right\rangle \overset{\Omega,\kappa\to 0}{\to} |D_n\rangle$$

and

$$\left|\bar{p_2^-}\right\rangle \overset{\Omega,\kappa\to 0}{\to} \left|p_2^-\right\rangle.$$

It can be found that the corresponding effective Hamiltonian given by:

$$H_{eff} = \Sigma_{|\Phi_1\rangle,|\Phi_2\rangle=|D_1\rangle,\ldots\left|\bar{D_n}\right\rangle,\left|\bar{p_2^-}\right\rangle} \left\langle\Phi\left|H\right|\bar{\Phi'}\right\rangle |\Phi\rangle\langle\Phi'| \text{ (SC-73)}$$

Since it is only desired to find the final state $|\psi\rangle$ up to terms in $\mathcal{O}\left(\sqrt{\Omega}\right) + \mathcal{O}(\kappa^2)$ it is sufficient to also find

$$\left|\bar{D_n}\right\rangle$$

and

$$\left|\bar{p_2^-}\right\rangle$$

only up to terms in $\mathcal{O}\left(\sqrt{\Omega}\right) + \mathcal{O}(\kappa^2)$. On the contrary, $H_{eff}$ has to be found up to terms in $\mathcal{O}\left(\Omega^{3/2}\right) + \mathcal{O}(\Omega\kappa^2)$, because the Hamiltonian is applied for a time $\mathcal{O}(\Omega^{-1})$.

From perturbation theory, it can be found:

$$\left|\bar{D_n}\right\rangle = |D_n\rangle - \Sigma_{j=\pm}\frac{\left\langle p_n^j\left|H^{(1)}\right|D_n\right\rangle}{\varepsilon_n^j}|\rho_n^j\rangle + higher order terms \text{ (SC-74)}$$

Since $\left\langle\rho_n^j\left|H^{(1)}\right|D_n\right\rangle \propto \eta \propto \sqrt{\Omega}$ already the first order correction to $|D_n\rangle$ is $\mathcal{O}\left(\sqrt{\Omega}\right)$, so that

$$\left|\bar{D_n}\right\rangle = |D_n\rangle + \mathcal{O}\left(\sqrt{\Omega}\right).$$

Analogously,

$$\left| \bar{p_2^-} \right\rangle = \left| p_2^- \right\rangle + \mathcal{O}\left(\sqrt{\Omega}\right).$$

It can thus be neglected the basis transformation between the dressed and undressed states and find the final $|\psi\rangle$ by directly applying $H_{eff}$ to the initial state $|\psi_0\rangle$.

The effective Hamiltonian is given by :

$$H_{eff} = H^{(2)} + \sum_n E_{D_n} |D_n\rangle\langle D_n| + E_{p_2^-} \left| p_2^- \right\rangle \left\langle p_2^- \right| \text{ (SC-75)}$$

where $E_{D_n}$ and $E_{p_2^-}$ are the perturbative corrections to the energies of $|D_n\rangle$ and $\left| p_2^- \right\rangle$ arising from the coupling to states outside of $H_{eff}$ due to $H^{(1)}$. All nondiagonal perturbative corrections (e.g. a coupling between $|D_1\rangle$ and $\left| p_2^- \right\rangle$ via $\left| p_1^\pm \right\rangle$) are $\mathcal{O}\left(\Omega^{3/2}\right)$ and can thus be neglected.

For $n \neq 2$, it can be found that:

$$E_{D_n} = -\sum_{j=1}^{\square} \frac{\left|\left\langle D_n \middle| p_n^j \right\rangle\right|^2}{\varepsilon_n^j} + \sum_{j_1, j_2 = \pm}^{\square} \frac{\left\langle D_n \middle| p_n^{j_1} \right\rangle\left\langle p_n^{j_1} \middle| H^{(1)} \middle| p_n^{j_2} \right\rangle\left\langle p_n^{j_2} \middle| D_n \right\rangle}{\varepsilon_n^{j_1} \varepsilon_n^{j_2}} + \mathcal{O}(\Omega^2) + \mathcal{O}(\Omega\kappa^2) \text{ (SC-76)}$$

$$E_{D_n} = -\eta^2 \left\langle n_1 0_e 1_{ph} \middle| \left(H_{n,1}^{(0)}\right)^{-1} \middle| n_1 0_e 1_{ph} \right\rangle + \eta^2 \left\langle n_1 0_e 1_{ph} \middle| \left(H_{n,1}^{(0)}\right)^{-1} H_{n,1}^{(1)} \left(H_{n,1}^{(0)}\right)^{-1} \middle| n_1 0_e 1_{ph} \right\rangle + \mathcal{O}(\Omega^2)$$

$$+ \mathcal{O}(\Omega\kappa^2)$$

where $H_{n,k}^{(i)}$ denotes the block of

$$H_{\square}^{(i)}$$

in $\mathcal{H}_{n,k}$. In the $|n_1 0_e 1_{ph}\rangle$, $|(n-1)_1 1_e 0_{ph}\rangle$ basis This leads to:

$$H_{n,1}^{(0)} = \begin{pmatrix} \delta & \sqrt{n}g \\ \sqrt{n}g & \Delta \end{pmatrix} \text{ (SC-77)}$$

and

$$H_{n,1}^{(1)} = \begin{pmatrix} -i\frac{\kappa}{2} & 0 \\ 0 & -i\frac{\gamma}{2} \end{pmatrix} \text{ (SC-78)}$$

A straightforward calculation gives:

$$E_{D_n} = -\frac{\eta^2 \Delta}{\Delta\delta - ng^2} - \frac{i}{2}\frac{\eta^2\left(\Delta^2\kappa + ng^2\gamma\right)}{\left(\Delta\delta - ng^2\right)^2} + \mathcal{O}\left(\Omega^2\right) + \mathcal{O}\left(\Omega\kappa^2\right) \text{ (SC-79)}$$

Inserting $\eta = \sqrt{\zeta\Omega}$ and $\gamma = r\kappa$, it is obtained:

$$E_{D_n} = -\zeta\Omega\left(\frac{\Delta}{(2-n)g^2} + \frac{i}{2}\frac{\Delta^2 + rng^2}{(2-n)^2 g^4}\kappa\right) + \mathcal{O}\left(\Omega^2\right) + \mathcal{O}\left(\Omega\kappa^2\right) \text{ (SC-80)}$$

$E_{D_n}$ and $E_{p_2^-}$ are not calculated explicitly. It is sufficient to note that both are $\mathcal{O}(\Omega)$, which will be sufficient for this analysis.

_SC-IID. Dynamics in $H_{eff}$_

After having reduced the problem to the effective Hamiltonian (SC-75), the dynamics of the system under $H_{eff}$ is now treated when starting in $|\psi_0\rangle = |D_0\rangle$. For this, it is defined

$$P = |D_n\rangle\langle D_n| + \left|p_2^-\right\rangle\left\langle p_2^-\right|$$

and split $H_{eff}$ into $H_{eff}^{(0)} = PH^{(2)}P$ and $H_{eff}^{(1)} = H_{eff} - H_{eff}^{(0)}$. Note that all terms in $H_{eff}^{(1)}$ are $\mathcal{O}(\Omega)$, while $H_{eff}^{(0)}$ contains terms of order $\eta \propto \sqrt{\Omega}$ and $\kappa$.

The next task will be to calculate the matrix elements of $H_{eff}^{(0)}$ in the $|D_2\rangle$, $\left|p_2^-\right\rangle$ basis. For this, the following equation is used:

$$\left|p_2^-\right\rangle = \frac{-\left|2_1 0_e 1_{ph}\right\rangle + \frac{\sqrt{2}g}{\Delta}\left|1_1 1_e 0_{ph}\right\rangle}{\sqrt{1 + \frac{2g^2}{\Delta^2}}} \text{ (SC-81)}$$

which can be easily verified by checking $H^{(0)}\left|p_2^-\right\rangle = 0$. Then

$$H_{eff}^{(0)} = \begin{pmatrix} \langle 2_1 0_e 0_{ph}|H|2_1 0_e 0_{ph}\rangle & \langle 2_1 0_e 0_{ph}|H|p_2^-\rangle \\ \langle p_2^-|H|2_1 0_e 0_{ph}\rangle & \langle p_2^-|H|p_2^-\rangle \end{pmatrix} = \begin{pmatrix} 0 & i\eta_{eff} \\ -i\eta_{eff} & -\frac{1}{2}\kappa_{eff} \end{pmatrix} \text{ (SC-82)}$$

$$\eta_{eff} = \frac{\eta}{\sqrt{1+\frac{2g^2}{\Delta^2}}}$$

with and $\kappa_{eff} = \frac{\Delta^2+2g^2r}{\Delta^2+2g^2}\kappa$ . The eigenstates of $H_{eff}^{(0)}$ are denoted by $|\chi_{\pm}\rangle$, they have eigen-values

$$\lambda_{\pm} = -\frac{i}{4}\kappa_{eff} \pm \sqrt{\eta_{eff}^2 - \frac{\kappa_{eff}^2}{16}} \text{ (SC-83)}$$

In the following, it will be shown that:

$$\frac{\Omega}{|\lambda_{\pm}|} \overset{\Omega,\kappa\to 0}{\to} 0$$

This implies that in the limit $\Omega$, $\kappa \to 0$ only the states $|D_n\rangle$ with $n \neq 2$ can be populated, and that $|D_2\rangle$ and $|p_2^-\rangle$ can be adiabatically eliminated.

To show $\frac{\Omega}{|\lambda_{\pm}|} \overset{\Omega,\kappa\to 0}{\to} 0$ , two cases can be considered: First, if $\eta_{eff} \geq \frac{\kappa_{eff}}{2}$ then $|\lambda_{\pm}| = \eta_{eff}$, so $\frac{\Omega}{|\lambda_{\pm}|} \propto \sqrt{\Omega} \overset{\Omega,\kappa\to 0}{\to} 0$ . Second, if $\eta_{eff} < \kappa_{eff}$ then

$$|\lambda_-| > |\lambda_+| = \frac{\kappa_{eff}}{4} - \sqrt{\frac{\kappa_{eff}^2}{16} - \eta_{eff}^2} \text{ (SC-84)}$$

$$|\lambda_-| = \frac{\kappa_{eff}}{4}\left(1 - \sqrt{1 - \frac{16\eta_{eff}^2}{\kappa_{eff}^2}}\right) \text{ (SC-85)}$$

$$|\lambda_-| \geq \frac{\kappa_{eff}}{4}\left(1 - \sqrt{1 - \frac{8\eta_{eff}^2}{\kappa_{eff}^2}}\right) \text{ (SC-86)}$$

$$|\lambda_-| \geq \frac{2\eta_{eff}^2}{\kappa_{eff}^2} \text{ (SC-87)}$$

Hence $\frac{\Omega}{|\lambda_{\pm}|} \geq \frac{2\eta_{eff}^2}{\kappa_{eff}^2}\Omega \propto \kappa_{eff} \overset{\Omega,\kappa\to 0}{\to} 0$ .

Now that it has been established that $\Omega\frac{\Omega}{|\lambda_{\pm}|} \overset{\Omega,\kappa\to 0}{\to} 0$ , it can be proceeded with adiabatically eliminating

$|D_2\rangle$ and $\left|p_{\bar{2}}\right\rangle$ . Since the systems start in $|D_0\rangle$ a coupling to states $|D_n\rangle$ with n > 2 is not possible, so the simulation can be restricted to $|D_0\rangle$, $|D_1\rangle$, $|D_2\rangle$, $\left|p_{\bar{2}}\right\rangle$ . In this basis, $H_{eff}$ takes the form:

$$H_{eff} = \begin{pmatrix} E_0 & \sqrt{N}\Omega\frac{e^{i\varphi}}{2} & 0 & 0 \\ \sqrt{N}\Omega\frac{e^{-i\varphi}}{2} & E_1 & \sqrt{2(N-1)}\Omega\frac{e^{i\varphi}}{2} & 0 \\ 0 & \sqrt{2(N-1)}\Omega\frac{e^{-i\varphi}}{2} & 0 & -i\eta_{eff} \\ 0 & 0 & i\eta_{eff} & -i\frac{i}{2}\kappa_{eff} \end{pmatrix} \text{(SC-88)}$$

Through the interaction with $|D_2\rangle$ and $\left|p_{\bar{2}}\right\rangle$ the $|D_1\rangle$ state gets dressed to:

$$\left|\bar{D}_1\right\rangle = |D_1\rangle - \sum_{j=\pm} \frac{\left\langle \chi_j \left| H_{eff}^{(1)} \right| D_1 \right\rangle}{\lambda_j} |\chi_j\rangle + higher order terms \text{ (SC-89)}$$

$$\left|\bar{D}_1\right\rangle = |D_1\rangle - \sqrt{2(N-1)}\frac{\Omega}{2}\left(H_{eff}^{(0)}\right)^{-1}|D_2\rangle + higher order terms \text{ (SC-90)}$$

$$\left|\bar{D}_1\right\rangle = |D_1\rangle + \frac{i}{4}\sqrt{2(N-1)}\frac{1}{\zeta}\left(1 - 2r\frac{g^2}{\Delta^2}\right)\kappa + \mathcal{O}\left(\sqrt{\Omega}\right) + \mathcal{O}(\kappa^2) \text{ (SC-91)}$$

while the $|D_0\rangle$ state does not get dressed.

The energy shift of $|D_1\rangle$ can be calculated as:

$$E'_{D_1} = -\frac{N-1}{2}\Omega^2\left\langle D_2 \left|\left(H_{eff}^{(0)}\right)^{-1}\right| D_2 \right\rangle = -\frac{i}{4}(N-1)\Omega\frac{1}{\zeta}\left(1 - 2r\frac{g^2}{\Delta^2}\right)\kappa + \mathcal{O}\left(\Omega^{3/2}\right) + \mathcal{O}(\Omega\kappa^2) \text{ (SC-92)}$$

Thus, in the $|D_0\rangle$,

$$\left|\bar{D}_1\right\rangle$$

basis, the effective Hamiltonian is given by:

$$\tilde{H} = \begin{pmatrix} E_{D_0}^{\square} & \sqrt{N}\Omega\frac{e^{i\varphi}}{2} \\ \sqrt{N}\Omega\frac{e^{i\varphi}}{2} & E_{D_1}^{\square} + E_{D_1}' \end{pmatrix} =$$

$$\begin{pmatrix} -\frac{\eta^2\Delta}{2g^2} - \frac{i}{2}\frac{\eta^2\Delta^2\kappa}{4g^4} & \sqrt{N}\Omega\frac{e^{i\varphi}}{2} \\ \sqrt{N}\Omega\frac{e^{i\varphi}}{2} & -\frac{\eta^2\Delta}{2g^2} - \frac{i}{2}\left(\eta^2\frac{\Delta^2\kappa+g^2\gamma}{4g^4} + \frac{(N-1)\Omega^2}{\eta^2}\left[\frac{\kappa}{2} + \frac{g^2\gamma}{\Delta^2}\right]\right) \end{pmatrix} \text{ (SC-93)}$$

where in the last equality $\zeta = \frac{\eta^2}{\Omega}$ and $r = \frac{\gamma}{\kappa}$ are inserted. This proves equations 14 and 15 of the in the part "description of a preferred embodiment".

*SC-IIE. Optimal parameters of the generation of a W state*

The infidelity of the generation of a W state is given by:

$$1 - F = \frac{\pi(\Gamma_0 + \Gamma_W)}{2\sqrt{N}\Omega_0} \text{ (SC-94)}$$

$$1 - F = \frac{\pi}{2\sqrt{N}}\left[\frac{\eta^2}{\Omega_0}\left(\frac{5\Delta^2\kappa}{4g^4} + \frac{\gamma}{g^2}\right) + (N-1)\frac{\Omega_0}{\eta^2}\left(\frac{\kappa}{2} + \frac{g^2\gamma}{\Delta^2}\right)\right] \text{ (SC-95)}$$

The optimal choice of $\frac{\eta^2}{\Omega_0}$ is given by:

$$\frac{\eta^2}{\Omega_0} = \sqrt{\frac{(N-1)\left(\frac{\kappa}{2} + \frac{g^2\gamma}{\Delta^2}\right)}{\frac{5\Delta^2\kappa}{4g^4} + \frac{\gamma}{g^2}}} \text{ (SC-96)}$$

and leads to:

$$1 - F = \frac{\pi}{\sqrt{N}}\sqrt{(N-1)\left(\frac{\kappa}{2} + \frac{g^2\gamma}{\Delta^2}\right)\left(\frac{5\Delta^2\kappa}{4g^4} + \frac{\gamma}{g^2}\right)} \text{ (SC-97)}$$

$$1 - F = \frac{\pi}{\sqrt{N}}\sqrt{1 - \frac{1}{N}}\sqrt{\frac{7}{4}\frac{\gamma\kappa}{g^2} + \frac{5}{8}\frac{\Delta^2\kappa^2}{g^4} + \frac{\gamma}{\Delta^2}} \text{ (SC-98)}$$

The optimal choice of $\Delta$ can be found to be $\Delta = \left(\frac{8}{5}\right)\sqrt{\frac{\gamma}{\kappa}}g$ which leads to:

$$1 - F = \frac{\pi}{\sqrt{N}} \sqrt{1 - \frac{1}{N}} \sqrt{\frac{7}{4} + 2\sqrt{\frac{5}{8}}} \sqrt{\frac{\gamma\kappa}{g^2}} \approx 5.73 \frac{\sqrt{1 - \frac{1}{N}}}{\sqrt{C}} \text{ (SC-99)}$$

and

$$\frac{\eta^2}{\Omega_0} = \sqrt{\frac{N-1}{2} \frac{\kappa}{\gamma}} g \text{ (SC-100)}$$

*SC-IIE. Implementation of a CZ and C2Z gate*

To implement a CZ gate, an additional state $|1'\rangle$ is introduced and now stores a qubit in the computational subspace spanned by $|0\rangle$ and $|1'\rangle$. Since the $|1'\rangle$ state does not couple to any other state, the evolution of a computational basis state is given by the Hamiltonian of the equation SC-93, however with the total number of atoms N replaced by $N_0$, the number of atoms starting in $|0\rangle$.

**Claims**

1. A device (10) adapted to implement a deterministic quantum gate, the device (10) comprising :

   - a trap (14) having an excitation mode, the trap (14) being notably a cavity (18), the trap (14) being adapted to trap a plurality of quantum objects (12) coupled with the excitation mode of the trap (14), each quantum object (12) comprising three eigenstates, respectively named a $|0\rangle$ state, a $|1\rangle$ state and a $|e\rangle$ state, and the quantum objects (12) being in all-to-all coupling configuration, and
   - a trap driver (16), the trap driver (16) being a wave generator adapted to generate a driving wave adapted to drive the excitation mode to which the plurality of quantum objects (12) are coupled, said driving wave having a frequency and an amplitude shaped to apply a deterministic non-local quantum gate on said quantum objects (12).

2. The device according to claim 1, wherein the device (10) is deprived of classical-quantum-feedback unit.

3. The device according to claim 1 or 2, wherein the amplitude of the driving wave is shaped to cause an adiabatic time-evolution of the excitation mode.

4. The device according to any one of the claims 1 to 3, wherein a first ratio is defined for the driving wave as the ratio of a frequency difference and a coupling strength, the frequency difference being the difference between the frequency of the driving wave and the frequency of the transition between the $|1\rangle$ state and the $|e\rangle$ state, the coupling strength being the strength of the coupling between the $|1\rangle$ state and the $|e\rangle$ state, the first ratio being superior or equal to 1, preferably superior or equal to 10, more preferably superior or equal to 100.

5. The device according to any one of the claims 1 to 4, wherein the temporal variation of the amplitude of the driving wave corresponds to a pulse amplitude with two phases: an increase phase from a first value to a second value and a decrease from the second value to the first value, the temporal variation of the amplitude of the pulse being preferably given by:

$$A * sin^2 \left( \pi * \frac{t}{T} \right)$$

Wherein:

　　• A is a constant,
　　• t is the time, and

• T is the pulse duration.

6. The device according to any one of the claims 1 to 5, wherein the trap driver (16) is adapted to drive the trap (14) with a detuning between the frequency of the driving wave and the frequency of the excitation mode given by:

$$\delta = \sqrt{\frac{\kappa}{2\gamma}}\, g$$

Wherein:

• $\delta$ is the detuning between the frequency of the driving wave and the excitation mode,
• $\kappa$ is the inverse lifetime of the excitation mode, and
• $\gamma$ is the inverse lifetime of the $|e\rangle$ state.

7. The device according to claim 1 or 2, wherein the device (10) further comprises a coupling wave generator adapted to couple the $|0\rangle$ state and the $|1\rangle$ state by generating a coupling wave, and the amplitude and the frequency of the driving wave are shaped to forbid two quantum objects (12) to be simultaneously in the $|1\rangle$ state.

8. The device according to claim 7, wherein a first set of parameters and a second set of parameters are defined,

   the first set of parameters consisting of the Rabi frequency of the coupling wave, the photon excitation rate of the trap driver (16), the lifetime of the $|e\rangle$ state and the lifetime of the excitation mode,
   the second set of parameters consisting of the detuning between the frequency of the driving wave and the frequency of the transition between the $|1\rangle$ state and the $|e\rangle$ state, the detuning between the frequency of the driving wave and the frequency of the excitation mode, the strength of the coupling between the $|1\rangle$ state and the $|e\rangle$ state and the parameter $\frac{\eta^2}{\Omega}$,
   the amplitude and the frequency of the driving wave being shaped so that each parameter of the second set is superior to 10 times each parameter of the first set.

9. The device according to claim 7 or 8, wherein the trap driver (16) is adapted to drive the trap (14) with a detuning between the frequency of the driving wave and the frequency of the excitation mode given by:

$$\delta = \frac{2g^2}{\Delta}$$

Wherein:

• $\delta$ is detuning between the frequency of the driving wave and the frequency of the excitation mode,
• $\Delta$ is the difference between the frequency of the driving wave and the frequency of the transition between the $|1\rangle$ state and the $|e\rangle$ state, and
• $g$ is the strength of the coupling between the $|1\rangle$ state and the $|e\rangle$ state.

10. The device according to any one of the claims 7 to 9, wherein the amplitude of the driving wave is shaped to obtain a parameter $\frac{\eta^2}{\Omega}$ given by:

$$\frac{\eta^2}{\Omega} = \sqrt{\frac{(N-1)\kappa}{2\gamma}} \, g$$

Wherein:

- $\eta$ is the photon excitation rate of the driving wave,
- $\Omega$ is the Rabi frequency of the coupling wave,
- $N$ is the number of quantum objects (12),
- $\kappa$ is the inverse lifetime of the excitation mode,
- $\gamma$ is the inverse lifetime of the $|e\rangle$ state, and
- $g$ is the strength of the coupling between the $|1\rangle$ state and the $|e\rangle$ state.

11. The device according to any one of the claims 7 to 10, wherein the trap driver (16) is adapted to generate a driving wave with a detuning from the frequency of the transition between the $|1\rangle$ state and the $|e\rangle$ state given by:

$$\Delta = \left(\frac{8}{5}\right)^{1/4} \sqrt{\frac{\gamma}{2\kappa}} \, g$$

Wherein:

- $\Delta$ is the difference between the frequency of the driving wave and the frequency of the transition between the $|1\rangle$ state and the $|e\rangle$ state,
- $\kappa$ is the inverse lifetime of the excitation mode,
- $\gamma$ is the inverse lifetime of the $|e\rangle$ state, and
- $g$ is the strength of the coupling between the $|1\rangle$ state and the $|e\rangle$ state.

12. The device according to any one of the claims 1 to 11, wherein the wave generator is chosen in the list consisting of a laser, a radio frequency generator and a microwave generator.

13. The device according to any one of the claims 1 to 12, wherein the quantum gate that the device (10) is adapted to apply is chosen among:

- a CZ-gate,
- a controlled-CZ gate,
- a Mølmer-Sørensen gate,
- a gate adapted to generate a GHZ gate when applied to as state $\left[\frac{|0\rangle+|1\rangle}{\sqrt{2}}\right]^{\otimes N}$ , and
- a gate adapted to generate a W-state when applied to a state $|0\rangle^{\otimes N}$.

14. The device according to any one of the claims 1 to 13, wherein each quantum object (12) is chosen in the list consisting of an atom, an ion, a superconducting qubit, a spin, a N-V center, a molecule and a quantum dot.

15. A method for implementing a deterministic quantum gate, the method being implemented by a device (10) adapted to implement a deterministic quantum gate, the method comprising:

- a step of trapping a plurality of quantum objects (12) coupled with an excitation mode of a trap (14), the trap (14) being notably a cavity (18), each quantum object (12) comprising three eigenstates, respectively named a $|0\rangle$ state, a $|1\rangle$ state and a $|e\rangle$ state, and the quantum objects (12) being in all-to-all coupling configuration, and
- a step of driving the trap (14) with a driving wave adapted to drive the excitation mode to which the plurality of quantum objects (12) are coupled, said driving wave having a frequency and an amplitude shaped to apply a deterministic non-local quantum gate on said quantum objects (12).

## FIG.1

FIG.2

FIG.3

**FIG.4**

**FIG.5**

## FIG.6

FIG.7

FIG.8

FIG.9

Europäisches
Patentamt

European
Patent Office

Office européen
des brevets

# EUROPEAN SEARCH REPORT

Application Number

EP 22 30 7037

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | US 2022/138608 A1 (RAMETTE JOSHUA [US] ET AL) 5 May 2022 (2022-05-05) <br> * figures 1A, 1B, 2A * <br> * paragraph [0044] – paragraph [0047] * <br> * paragraph [0053] * | 1-15 | INV. <br> G06N10/40 |
| A | STEPHAN WELTE ET AL: "Photon-Mediated Quantum Gate between Two Trapped Neutral Atoms in an Optical Cavity", ARXIV.ORG, CORNELL UNIVERSITY LIBRARY, 201 OLIN LIBRARY CORNELL UNIVERSITY ITHACA, NY 14853, 18 January 2018 (2018-01-18), XP081207676, DOI: 10.1103/PHYSREVX.8.011018 <br> * abstract * <br> * figure 1 * <br> * page 1 * | 1-15 | |

TECHNICAL FIELDS SEARCHED (IPC)

G06N

The present search report has been drawn up for all claims

| Place of search | Date of completion of the search | Examiner |
|---|---|---|
| The Hague | 25 May 2023 | Theissing, Simon |

EPO FORM 1503 03.82 (P04C01)

## ANNEX TO THE EUROPEAN SEARCH REPORT
## ON EUROPEAN PATENT APPLICATION NO.

EP 22 30 7037

This annex lists the patent family members relating to the patent documents cited in the above-mentioned European search report.
The members are as contained in the European Patent Office EDP file on
The European Patent Office is in no way liable for these particulars which are merely given for the purpose of information.

25-05-2023

| Patent document cited in search report | Publication date | Patent family member(s) | Publication date |
|---|---|---|---|
| US 2022138608 A1 | 05-05-2022 | NONE | |

For more details about this annex : see Official Journal of the European Patent Office, No. 12/82

EPO FORM P0459